# EUROPEAN PATENT SPECIFICATION

(11) **EP 4 456 584 B1**
(45) Date of publication and mention of the grant of the patent: **19.08.2026**
(21) Application number: 23746437.5
(22) Date of filing: 29.01.2023
(51) Int. Cl.: H04L 67/51, H04W 4/20, H04W 4/50, H04W 8/08, H04W 16/18, H04L 41/5051

(54) **EDGE APPLICATION SERVER SELECTION BY EDGE ENALER SERVER BASED ON REQUEST INFORMATION FROM A TERMINAL DEVICE**
AUSWAHL EINES EDGE-ANWENDUNGSSERVERS DURCH EINEN EDGE-ENABLER-SERVER AUF BASIS VON ANFRAGEINFORMATIONEN VON EINER ENDGERÄTEVORRICHTUNG
SÉLECTION DE SERVEUR D'APPLICATION PÉRIPHÉRIQUE PAR UN SERVEUR D'ACTIVATION PÉRIPHÉRIQUE SUR LA BASE D'INFORMATIONS DE REQUÊTE PROVENANT D'UN DISPOSITIF TERMINAL

(30) Priority: 30.01.2022 CN 202210114775
(43) Date of publication of application: 30.10.2024
(73) Proprietor: Huawei Technologies Co., Ltd., Shenzhen, Guangdong 518129 (CN)
(72) Inventor: HU, Yajie, Shenzhen, Guangdong 518129 (CN); YANG, Yanmei, Shenzhen, Guangdong 518129 (CN); GE, Cuili, Shenzhen, Guangdong 518129 (CN)
(74) Representative: Grünecker Patent- und Rechtsanwälte PartG mbB
(86) International application number: PCT/CN2023/073680
(87) International publication number: WO 2023/143560

(56) References cited:
- WO-A1-2021/225389
- CN-A- 113 794 784
- CN-A- 113 795 014
- CN-A- 113 840 293
- CN-A- 113 840 293
- "3 Generation Partnership Project; Technical Specification Group Services and System Aspects; Architecture for enabling Edge Applications; (Release 17)", no. V17.0.0, 28 June 2021 (2021-06-28), pages 1 - 157, XP052029833, Retrieved from the Internet <URL:https://ftp.3gpp.org/Specs/archive/23_series/23.558/23558-h00.zip 23558-h00.doc> [retrieved on 20210628]

## Description

This application claims priority to Chinese Patent Application No. 202210114775.6, filed with the China National Intellectual Property Administration on January 30, 2022 and entitled "DEVICE SELECTION METHOD AND APPARATUS".

### TECHNICAL FIELD

This application relates to the communication field, and more specifically, to a device selection method and an apparatus thereof.

### BACKGROUND

To meet a service requirement, a user may request a home operator, to request, through a joint interface between the home operator and another operator, the another operator (for example, a target operator) to deploy some devices or applications (for example, at least one edge enabler server (Edge Enabler Server, EES) or at least one edge application server (edge application server, EAS)), where the at least one EAS is deployed in a network of the another operator (for example, the target operator).

However, it is difficult to ensure that the devices or applications deployed by the another operator (for example, the target operator) for the user have a capability required for providing a roaming service for the user. As a result, user experience is severely compromised.

Document 3GPP TS 23.558, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,no. V17.0.0 28 June 2021 (2021-06-28), pages 1-157, XP52029833A relates to an architecture for enabling edge applications. A topological service area is defined in relationship with a UE's point of connection to the network, such as: a collection of Cell IDs, Tracking Area Identities or the PLMN ID.

Document CN113840293A relates to a method and device for obtaining edge service, and the method comprises the steps that if a first edge configuration server ECS determines that EES managed by the first ECS cannot provide edge service for terminal equipment, the first ECS obtains information of a second ECS, and the first ECS sends first information to first equipment, the first information comprises the information of the first EES or the information of the second ECS, and the first EES is the EES managed by the second ECS.

### SUMMARY

Embodiments of this application provide a device selection method and an apparatus, and an EAS selected by an edge enabler server (Edge Enabler Server, EES) for a terminal device (User equipment, UE) supports a service of the UE. This avoids a problem that the service is affected because an EAS obtained by the EES cannot meet the service of the UE, and improves user experience.

The invention is defined by the independent claims, and further embodiments are defined in the dependent claims.

According to a first aspect, a device selection method is provided, and includes: An edge enabler server EES receives, from a terminal device (UE), information for requesting to determine a first edge application server EAS for the UE. After the EES receives the information for requesting to determine the first edge application server EAS for the UE, the EES determines the first EAS based on at least one of a public land mobile network identity (Public land mobile network identity, PLMN ID) corresponding to the UE or an edge computing service provider identity (Edge computing service provider identity, ECSP ID) corresponding to the UE. The EES sends information about the first EAS to the UE.

The information about the first EAS may include at least one of identification information of the first EAS, endpoint information (for example, an endpoint address like a uniform resource identifier, an internet protocol, or a fully qualified domain name) of the first EAS, and a PLMN ID of the first EAS or an ECSP ID of the first EAS. The first EAS may include one or more EASs.

In an implementation, the UE may send a service discovery request message to the EES, where the service discovery request message includes the information for requesting to determine the first EAS for the UE.

Optionally, the service discovery request message may further include location information of the UE, identity information of the UE, and application client profile (AC profile) information.

In addition, the EES may further determine, based on the location information of the UE and an EAS discovery filter (EAS discovery filter), an EAS associated with the EES, and send information about the EAS associated with the EES to the UE. Further, the EES may send, to the UE, at least one of information about whether each EAS associated with the EES supports serving the roaming terminal device, and a PLMN ID corresponding to the EAS or an ECSP ID corresponding to the EAS. After receiving the foregoing information, the UE may determine the first EAS based on at least one of the PLMN ID corresponding to the UE or the ECSP ID corresponding to the UE.

In addition, if none of the EASs associated with the EES has a capability of serving the UE, the EES sends failure information to the UE, where the failure information indicates that no EAS has the capability of serving the UE. Optionally, the failure information may carry a failure cause indication, to indicate that no EAS can provide a service for the UE.

According to the foregoing solution, after receiving the information for requesting to determine the first EAS for the UE, the EES determines the first EAS based on at least one of the PLMN ID corresponding to the UE or the ECSP ID corresponding to the UE, and sends the information about the first EAS to the UE. The EES selects the first EAS for the UE based on at least one of the PLMN ID of the UE or the ECSP ID of the UE, and the first EAS selected by the EES for the UE supports a service of the UE. This avoids a problem that the service is affected because an EAS obtained by the EES cannot meet the service of the UE, and improves user experience.

With reference to the first aspect, in some implementations of the first aspect, that the EES determines the first EAS based on at least one of a PLMN ID corresponding to the UE or an ECSP ID corresponding to the UE includes at least one of the following manners: The EES determines the first EAS based on a PLMN ID corresponding to the EAS associated with the EES or the PLMN ID of the UE. Alternatively, the EES determines the first EAS based on an ECSP ID corresponding to the EAS associated with the EES or the ECSP ID of the UE, where the first EAS is an EAS associated with the EES.

With reference to the first aspect, in some implementations of the first aspect, the EES sends at least one piece of the following information to a first edge configuration server ECS: the PLMN ID corresponding to the first EAS, the ECSP ID corresponding to the first EAS, a PLMN ID corresponding to the EES, or an ECSP ID corresponding to the EES.

With reference to the first aspect, in some implementations of the first aspect, when the at least one piece of information includes at least one of the PLMN ID corresponding to the EES or the ECSP ID corresponding to the EES, the method further includes at least one of the following: The EES determines, based on the PLMN ID corresponding to the first EAS, the PLMN ID corresponding to the EES. Alternatively, the EES determines, based on the ECSP ID corresponding to the first EAS, the ECSP ID corresponding to the EES.

The foregoing at least one piece of information may identify whether the first EAS can provide a service for the roaming UE, whether the first EAS can provide a service for a user of a partner ECSP, whether the EES can provide a service for the roaming UE, whether the EES can provide a service for the user of the partner ECSP, or whether the EAS associated with the EES can provide a service for the roaming UE or provide a service for the user of the partner ECSP.

In an implementation, the EES may send a service registration request message to the first ECS, where the service registration request message includes the foregoing at least one piece of information.

In addition, the foregoing at least one piece of information may alternatively be carried in any other message between the EES and the first ECS. This is not limited herein in this application.

Optionally, the first ECS may send at least one of a PLMN supported by the first ECS or an ECSP supported by the first ECS to a second ECS. Further, the first ECS may send at least one of the PLMN ID corresponding to the EES, the ECSP ID corresponding to the EES, the PLMN ID corresponding to the first EAS, or the ECSP ID corresponding to the first EAS to the second ECS.

With reference to the first aspect, in some implementations of the first aspect, the EES receives at least one of the PLMN ID corresponding to the UE or the ECSP ID corresponding to the UE from a core network element.

Specifically, the EES may subscribe to a PLMN change (change) event from a 5G core network (5GC). To be specific, the EES may subscribe to information about the PLMN change event from a session management function (Session management function, SMF) network element, or the EES may subscribe to the PLMN change event from the SMF via a network element function (Network element function, NEF) network element. Then, when the SMF detects a PLMN change event of the UE, the SMF may send a PLMN change event notification message to the EES, where the PLMN change event notification message may carry at least one of a UE home PLMN or a UE serving PLMN.

Further, the EES may obtain ECSP information of the UE from a unified data management (Unified data management, UDM) network element via the SMF.

With reference to the first aspect, in some implementations of the first aspect, the information for requesting to determine the first EAS for the UE includes at least one of the PLMN ID corresponding to the UE or the ECSP ID corresponding to the UE.

With reference to the first aspect, in some implementations of the first aspect, the EES receives at least one of the PLMN ID corresponding to the first EAS or the ECSP ID corresponding to the first EAS from the first EAS.

The information may identify whether the first EAS can provide a service for the roaming UE, or whether the first EAS can provide a service for the user of the partner ECSP.

In a possible implementation, the first EAS may send an EAS registration request (EAS registration (update) request) message to the EES, where the EAS registration request message carries at least one of the PLMN ID corresponding to the first EAS or the ECSP ID corresponding to the first EAS. Further, the foregoing information may be stored in an EAS profile (EAS profile).

With reference to the first aspect, in some implementations of the first aspect, the first EAS sends at least one of the PLMN ID corresponding to the first EAS or the ECSP ID corresponding to the first EAS to the EES.

Optionally, after receiving the registration request message, the EES may store information included in the registration request message, and send a registration (update) response message to the first EAS.

According to a second aspect, a device selection method is provided, and includes: A first ECS receives, from UE or a second ECS, information for requesting to determine an EES for the UE. After the first ECS receives, from the UE or the second ECS, the information for requesting to determine the EES for the UE, the first ECS determines the EES based on at least one of a PLMN ID corresponding to the UE or an ECSP ID corresponding to the UE. The first ECS sends information about the EES to the second ECS.

The information about the EES may include identification information of the EES, endpoint information (for example, an endpoint address like a uniform resource identifier of the EES, an internet protocol of the EES, or a fully qualified domain name of the EES) of the EES, a service range of the EES, a data network access identifier of the EES, and the like.

Optionally, the information about the EES may further include at least one of identification information of an EAS associated with the EES, endpoint information (for example, an endpoint address like a uniform resource identifier, an internet protocol, or a fully qualified domain name) of the EAS associated with the EES, and a PLMN ID of the EAS associated with the EES or an ECSP ID of the EAS associated with the EES.

Further, the EES may include one or more EESs.

In an implementation, the UE or the second ECS may send a service provisioning request message to the first ECS, where the service provisioning request message may include the information for requesting to determine the EES for the UE.

In an implementation, the first ECS may send a service provisioning response message to the second ECS, where the service provisioning response message may include the information about the EES.

It should be understood that if the first ECS determines that no EES supports a service of the UE, the first ECS may return failure indication information and a failure cause to the UE, to indicate that no EES can support the service of the UE.

According to the foregoing solution, after receiving the information for determining the EES for the UE, the first ECS determines the EES based on at least one of the PLMN ID corresponding to the UE or the ECSP ID corresponding to the UE, and sends the information about the EES to the second ECS. In addition, the EES selected by the first ECS for the UE supports the service of the UE. This avoids a problem that the service is affected when a further selected EAS cannot meet the service of the UE because an EES obtained by the first ECS cannot meet the service of the UE, and improves user experience.

In addition, if the first ECS determines that no EES supports the service of the UE, the first ECS may return the failure indication information to the UE. Therefore, the UE is prevented from still initiating the service when no EES supports the service of the UE.

With reference to the second aspect, in some implementations of the second aspect, that the first ECS determines the EES based on at least one of a PLMN ID corresponding to the UE and an ECSP ID corresponding to the UE includes at least one of the following manners: The first ECS determines the EES based on the PLMN ID corresponding to the UE and a PLMN ID corresponding to the EES. Alternatively, the first ECS determines the EES based on the ECSP ID corresponding to the UE and an ECSP ID corresponding to the EES.

With reference to the second aspect, in some implementations of the second aspect, that the first ECS determines the EES based on at least one of the PLMN ID corresponding to the UE or the PLMN ID corresponding to the EES includes: The first ECS determines the EES based on the PLMN ID corresponding to the UE, the PLMN ID corresponding to the EES, and a capability of the EAS associated with the EES.

With reference to the second aspect, in some implementations of the second aspect, that the first ECS determines the EES based on at least one of the ECSP ID corresponding to the UE or the ECSP ID corresponding to the EES includes: The first ECS determines the EES based on the ECSP ID corresponding to the UE, the ECSP ID corresponding to the EES, and a capability of the EAS associated with the EES.

The capability of the EAS associated with the EES may include at least one of the PLMN ID corresponding to the EAS associated with the EES or the ECSP ID corresponding to the EAS associated with the EES.

With reference to the second aspect, in some implementations of the second aspect, the first ECS receives, from the UE, information for requesting to determine a first EAS for the UE, where the first EAS is an EAS associated with the EES. After the first ECS receives the information for determining the first EAS for the UE, the first ECS determines the first EAS based on at least one of the PLMN ID corresponding to the UE or the ECSP ID corresponding to the UE. The first ECS sends information about the first EAS to the UE.

The information about the first EAS may include at least one of identification information of the first EAS, endpoint information (for example, an endpoint address like a uniform resource identifier, an internet protocol, or a fully qualified domain name) of the first EAS, and a PLMN ID of the first EAS or an ECSP ID of the first EAS. The first EAS may include one or more EASs.

For example, the information for requesting to determine the first EAS for the UE may include at least one of the PLMN ID corresponding to the UE or the ECSP ID corresponding to the UE.

In an implementation, the UE may send a service discovery request message to the first ECS, where the service discovery request message may include the information for requesting to determine the first EAS for the UE.

In an implementation, the first ECS may send a service discovery response message to the UE, where the service discovery response message may include the information about the first EAS.

According to the foregoing solution, after receiving the information for requesting to determine the first EAS for the UE, the first ECS determines the first EAS based on at least one of the PLMN ID corresponding to the UE or the ECSP ID corresponding to the UE, and sends the information about the first EAS to the UE. In addition, the first EAS selected by the first ECS for the UE supports the service of the UE. This avoids a problem that the service is affected because an EAS obtained by the first ECS cannot meet the service of the UE, and improves user experience.

With reference to the second aspect, in some implementations of the second aspect, that the first ECS determines the first EAS based on at least one of the PLMN ID corresponding to the UE or the ECSP ID corresponding to the UE includes at least one of the following manners: The first ECS determines the first EAS based on the PLMN ID corresponding to the UE and the PLMN ID corresponding to the EAS associated with the EES. Alternatively, the first ECS determines the first EAS based on the ECSP ID corresponding to the UE and the ECSP ID corresponding to the EAS associated with the EES.

With reference to the second aspect, in some implementations of the second aspect, the first ECS receives at least one piece of the following information from the EES: the PLMN ID corresponding to the first EAS, the ECSP ID corresponding to the first EAS, the PLMN ID corresponding to the EES, or the ECSP ID corresponding to the EES.

In an implementation, the EES may send a service registration request message to the first ECS, where the service registration request message includes the foregoing at least one piece of information.

In addition, the foregoing at least one piece of information may alternatively be carried in any other message between the EES and the first ECS. This is not limited herein in this application.

Further, the first ECS may send a registration (update) response message to the EES.

With reference to the second aspect, in some implementations of the second aspect, the information for requesting to determine the EES for the UE includes at least one of the PLMN ID corresponding to the UE or the ECSP ID corresponding to the UE.

According to a third aspect, a device selection method is provided, and includes: A first ECS receives, from UE, information for requesting to determine a first EAS for the UE. After the first ECS receives the information for requesting to determine the first EAS for the UE, the first ECS determines the first EAS based on at least one of a PLMN ID corresponding to the UE or an ECSP ID corresponding to the UE. The first ECS sends information about the first EAS to the UE.

The information about the first EAS may include at least one of identification information of the first EAS, endpoint information (for example, an endpoint address like a uniform resource identifier, an internet protocol, or a fully qualified domain name) of the first EAS, and a PLMN ID of the first EAS or an ECSP ID of the first EAS. The first EAS may include one or more EASs.

For example, the information for requesting to determine the first EAS for the UE may include at least one of PLMN ID information corresponding to the UE or ECSP ID information corresponding to the UE.

In an implementation, the UE may send a service discovery request message to the first ECS, where the service discovery request message includes the information for requesting to determine the first EAS for the UE.

Optionally, the service discovery request message may further include location information of the UE, identity information of the UE, and application client profile (AC profile) information.

In addition, if the first ECS determines that no EAS has a capability of serving the UE, the first ECS sends failure information to the UE, where the failure information indicates that no EAS has the capability of serving the UE. Optionally, the failure information may carry a failure cause indication, to indicate that no EAS can provide a service for the UE.

According to the foregoing solution, for beneficial effects, refer to the related descriptions of the second aspect. For brevity, details are not described herein in this application.

With reference to the third aspect, in some implementations of the third aspect, that the first ECS determines the first EAS based on at least one of a PLMN ID corresponding to the UE or an ECSP ID corresponding to the UE includes at least one of the following manners: The first ECS determines the first EAS based on the PLMN ID corresponding to the UE and a PLMN ID corresponding to an EAS associated with an EES. Alternatively, the first ECS determines the first EAS based on the ECSP ID corresponding to the UE and an ECSP ID corresponding to an EAS associated with an EES, where the first EAS is an EAS associated with the EES.

With reference to the third aspect, in some implementations of the third aspect, the first ECS receives, from the UE or a second ECS, information for requesting to determine the EES for the UE. After the first ECS receives, from the UE or the second ECS, the information for requesting to determine the EES for the UE, the first ECS determines the EES based on at least one of the PLMN ID corresponding to the UE or the ECSP ID corresponding to the UE. The first ECS sends information about the EES to the second ECS.

For example, the information for requesting to determine the EES for the UE may include one of the PLMN ID corresponding to the first EAS, the ECSP ID corresponding to the first EAS, a PLMN ID corresponding to the EES, or an ECSP ID corresponding to the EES.

The information about the EES may include identification information of the EES, endpoint information (for example, an endpoint address like a uniform resource identifier of the EES, an internet protocol of the EES, or a fully qualified domain name of the EES) of the EES, a service range of the EES, a data network access identifier of the EES, and the like.

Optionally, the information about the EES may further include at least one of identification information of the EAS associated with the EES, endpoint information (for example, an endpoint address like a uniform resource identifier, an internet protocol, or a fully qualified domain name) of the EAS associated with the EES, and the PLMN ID of the EAS associated with the EES or the ECSP ID of the EAS associated with the EES.

Further, the EES may include one or more EESs.

In an implementation, the UE or the second ECS may send a service provisioning request message to the first ECS, where the service provisioning request message may include the information for requesting to determine the EES for the UE.

In an implementation, the first ECS may send a service provisioning response message to the second ECS, where the service provisioning response message may include the information about the EES.

It should be understood that if the first ECS determines that no EES supports the service of the UE, the first ECS may return failure indication information and a failure cause to the UE, to indicate that no EES can support the service of the UE.

According to the foregoing solution, for beneficial effects, refer to the related descriptions of the second aspect. For brevity, details are not described herein in this application.

With reference to the third aspect, in some implementations of the third aspect, that the first ECS determines the EES based on at least one of the PLMN ID corresponding to the UE or the ECSP ID corresponding to the UE includes at least one of the following manners: The first ECS determines the EES based on the PLMN ID corresponding to the UE and the PLMN ID corresponding to the EES. Alternatively, the first ECS determines the EES based on the ECSP ID corresponding to the UE and the ECSP ID corresponding to the EES.

With reference to the third aspect, in some implementations of the third aspect, that the first ECS determines the EES based on the PLMN ID corresponding to the UE and the PLMN ID corresponding to the EES includes: The first ECS determines the EES based on the PLMN ID corresponding to the UE, the PLMN ID corresponding to the EES, and a capability of the EAS associated with the EES.

With reference to the third aspect, in some implementations of the third aspect, that the first ECS determines the EES based on the ECSP ID corresponding to the UE and the ECSP ID corresponding to the EES includes: The first ECS determines the EES based on the ECSP ID corresponding to the UE, the ECSP ID corresponding to the EES, and a capability of the EAS associated with the EES.

The capability of the EAS associated with the EES may include at least one of the PLMN ID corresponding to the EAS associated with the EES or the ECSP ID corresponding to the EAS associated with the EES.

With reference to the third aspect, in some implementations of the third aspect, the first ECS receives one of the PLMN ID corresponding to the EES or the ECSP ID corresponding to the EES from the EES.

Optionally, the first ECS may further receive at least one of the PLMN ID corresponding to the first EAS or the ECSP ID corresponding to the first EAS from the EES.

With reference to the third aspect, in some implementations of the third aspect, the information for requesting to determine the first EAS for the UE includes at least one of the PLMN ID corresponding to the UE or the ECSP ID corresponding to the UE.

According to a fourth aspect, a device selection method is provided, and includes: A second ECS receives, from UE, information for requesting to determine an EES for the UE. After the second ECS receives the information for requesting to determine the EES for the UE, the second ECS determines the EES based on at least one of a PLMN ID corresponding to the UE or an ECSP ID corresponding to the UE. The second ECS sends information about the EES to the UE.

For example, the information for requesting to determine the EES for the UE may include at least one of the PLMN ID corresponding to the UE or the ECSP ID corresponding to the UE.

The information about the EES may include identification information of the EES, endpoint information (for example, an endpoint address like a uniform resource identifier of the EES, an internet protocol of the EES, or a fully qualified domain name of the EES) of the EES, a service range of the EES, a data network access identifier of the EES, and the like.

Optionally, the information about the EES may further include at least one of identification information of an EAS associated with the EES, endpoint information (for example, an endpoint address like a uniform resource identifier, an internet protocol, or a fully qualified domain name) of the EAS associated with the EES, and a PLMN ID of the EAS associated with the EES or an ECSP ID of the EAS associated with the EES.

Further, the EES may include one or more EESs.

In an implementation, the UE may send a service provisioning request message to the second ECS, where the service provisioning request message may include the information for requesting to determine the EES for the UE.

In an implementation, the second ECS may send a service provisioning response message to the UE, where the service provisioning response message may include the information about the EES.

It should be understood that if the second ECS determines that no EES supports a service of the UE, the second ECS may return failure indication information and a failure cause to the UE, to indicate that no EES can support the service of the UE.

According to the foregoing solution, for beneficial effects, refer to the related descriptions of the second aspect. For brevity, details are not described herein in this application.

With reference to the fourth aspect, in some implementations of the fourth aspect, that the second ECS determines the EES based on at least one of a PLMN ID corresponding to the UE or an ECSP ID corresponding to the UE includes at least one of the following manners: The second ECS determines the EES based on the PLMN ID corresponding to the UE and a PLMN ID corresponding to the EES. Alternatively, the second ECS determines the EES based on the ECSP ID corresponding to the UE and an ECSP ID corresponding to the EES.

With reference to the fourth aspect, in some implementations of the fourth aspect, that the second ECS determines the EES based on the PLMN ID corresponding to the UE or a PLMN ID corresponding to the EES includes: The second ECS determines the EES based on the PLMN ID corresponding to the UE, the PLMN ID corresponding to the EES, and a capability of the EAS associated with the EES.

With reference to the fourth aspect, in some implementations of the fourth aspect, that the second ECS determines the EES based on the ECSP ID corresponding to the UE and an ECSP ID corresponding to the EES includes: The second ECS determines the EES based on the ECSP ID corresponding to the UE, the ECSP ID corresponding to the EES, and a capability of the EAS associated with the EES.

The capability of the EAS associated with the EES may include at least one of the PLMN ID corresponding to the EAS associated with the EES or the ECSP ID corresponding to the EAS associated with the EES.

With reference to the fourth aspect, in some implementations of the fourth aspect, the second ECS receives, from the UE, information for requesting to determine a first EAS for the UE. After the second ECS receives the information for requesting to determine the first EAS for the UE, the second ECS determines the first EAS based on at least one of the PLMN ID corresponding to the UE or the ECSP ID corresponding to the UE. The second ECS sends information about the first EAS to the UE.

The information about the first EAS may include at least one of identification information of the first EAS, endpoint information (for example, an endpoint address like a uniform resource identifier, an internet protocol, or a fully qualified domain name) of the first EAS, and a PLMN ID of the first EAS or an ECSP ID of the first EAS. The first EAS may include one or more EASs.

For example, the information for requesting to determine the first EAS for the UE may include at least one of the PLMN ID corresponding to the first EAS, the ECSP ID corresponding to the first EAS, the PLMN ID that corresponds to the EES and that is received by the second ECS from a first ECS, or the ECSP ID corresponding to the EES.

In an implementation, the UE may send a service discovery request message to the second ECS, where the service discovery request message may include the information for requesting to determine the first EAS for the UE.

In an implementation, the second ECS may send a service discovery response message to the UE, where the service discovery response message may include the information about the first EAS.

In addition, if the second ECS determines that no EAS has a capability of serving the UE, the second ECS sends failure information to the UE, where the failure information indicates that no EAS has the capability of serving the UE. Optionally, the failure information may carry a failure cause indication, to indicate that no EAS can provide a service for the UE.

According to the foregoing solution, for beneficial effects, refer to the related descriptions of the second aspect. For brevity, details are not described herein in this application.

With reference to the fourth aspect, in some implementations of the fourth aspect, that the second ECS determines the first EAS based on at least one of the PLMN ID corresponding to the UE or the ECSP ID corresponding to the UE includes at least one of the following manners: The second ECS determines the first EAS based on the PLMN ID corresponding to the EAS associated with the EES and the PLMN ID corresponding to the UE. Alternatively, the second ECS determines the first EAS based on the ECSP ID corresponding to the EAS associated with the EES and the ECSP ID corresponding to the UE, where the first EAS is an EAS associated with the EES.

With reference to the fourth aspect, in some implementations of the fourth aspect, the second ECS receives at least one of the PLMN ID corresponding to the EAS associated with the EES or the ECSP ID corresponding to the EAS associated with the EES from the first ECS, where the EES is an EES associated with the first ECS.

Optionally, the second ECS may further receive at least one of the PLMN ID corresponding to the first EAS or the ECSP ID corresponding to the first EAS from the first ECS.

With reference to the fourth aspect, in some implementations of the fourth aspect, the information for requesting to determine the EES for the UE includes at least one of the PLMN ID corresponding to the UE or the ECSP ID corresponding to the UE.

According to a fifth aspect, a device selection method is provided, and includes: A second ECS receives, from UE, information for requesting to determine a first EAS for the UE. After the second ECS receives the information for requesting to determine the first EAS for the UE, the second ECS determines the first EAS based on at least one of a PLMN ID corresponding to the UE and an ECSP ID corresponding to the UE. The second ECS sends information about the first EAS to the UE.

The information about the first EAS may include at least one of identification information of the first EAS, endpoint information (for example, an endpoint address like a uniform resource identifier, an internet protocol, or a fully qualified domain name) of the first EAS, and a PLMN ID of the first EAS or an ECSP ID of the first EAS. The first EAS may include one or more EASs.

Specifically, the information for requesting to determine the first EAS for the UE may include at least one of PLMN ID information corresponding to the UE or ECSP ID information corresponding to the UE.

In an implementation, the UE may send a service discovery request message to the second ECS, where the service discovery request message includes the information for requesting to determine the first EAS for the UE.

Optionally, the service discovery request message may further include location information of the UE, identity information of the UE, and application client profile (AC profile) information.

In addition, if the second ECS determines that no EAS has a capability of serving the UE, the second ECS sends failure information to the UE, where the failure information indicates that no EAS has the capability of serving the UE. Optionally, the failure information may carry a failure cause indication, to indicate that no EAS can provide a service for the UE.

According to the foregoing solution, for beneficial effects, refer to the related descriptions of the second aspect. For brevity, details are not described herein in this application.

With reference to the fifth aspect, in some implementations of the fifth aspect, the second ECS receives, from the UE, the information for requesting to determine the first EAS for the UE. After the second ECS receives the information for requesting to determine the first EAS for the UE, the second ECS determines the first EAS based on at least one of the PLMN ID corresponding to the UE or the ECSP ID corresponding to the UE. The second ECS sends information about the first EAS to the UE.

With reference to the fifth aspect, in some implementations of the fifth aspect, that the second ECS determines the first EAS based on at least one of the PLMN ID corresponding to the UE or the ECSP ID corresponding to the UE includes at least one of the following manners: The second ECS determines the first EAS based on a PLMN ID corresponding to an EAS associated with an EES and the PLMN ID corresponding to the UE. Alternatively, the second ECS determines the first EAS based on an ECSP ID corresponding to an EAS associated with an EES and the ECSP ID corresponding to the UE, where the first EAS is an EAS associated with the EES.

With reference to the fifth aspect, in some implementations of the fifth aspect, the second ECS receives, from the UE, information for requesting to determine the EES for the UE. After the second ECS receives the information for requesting to determine the EES for the UE, the second ECS determines the EES based on at least one of the PLMN ID corresponding to the UE or the ECSP ID corresponding to the UE. The second ECS sends information about the EES to the UE based on the EES.

The information about the EES may include identification information of the EES, endpoint information (for example, an endpoint address like a uniform resource identifier of the EES, an internet protocol of the EES, or a fully qualified domain name of the EES) of the EES, a service range of the EES, a data network access identifier of the EES, and the like.

Optionally, the information about the EES may further include at least one of identification information of the EAS associated with the EES, endpoint information (for example, an endpoint address like a uniform resource identifier, an internet protocol, or a fully qualified domain name) of the EAS associated with the EES, and the PLMN ID of the EAS associated with the EES or the ECSP ID of the EAS associated with the EES.

Further, the EES may include one or more EESs.

In an implementation, the UE may send a service provisioning request message to the second ECS, where the service provisioning request message may include the information for requesting to determine the EES for the UE.

In an implementation, the second ECS may send a service provisioning response message to the UE, where the service provisioning response message may include the information about the EES.

It should be understood that if the second ECS determines that no EES supports a service of the UE, the second ECS may return failure indication information and a failure cause to the UE, to indicate that no EES can support the service of the UE.

According to the foregoing solution, for beneficial effects, refer to the related descriptions of the second aspect. For brevity, details are not described herein in this application.

With reference to the fifth aspect, in some implementations of the fifth aspect, that the second ECS determines the EES based on at least one of the PLMN ID corresponding to the UE or the ECSP ID corresponding to the UE includes at least one of the following manners: The second ECS determines the EES based on the PLMN ID corresponding to the UE and a PLMN ID corresponding to the EES. Alternatively, the second ECS determines the EES based on the ECSP ID corresponding to the UE and an ECSP ID corresponding to the EES.

With reference to the fifth aspect, in some implementations of the fifth aspect, that the second ECS determines the EES based on the PLMN ID corresponding to the UE and a PLMN ID corresponding to the EES includes: The second ECS determines the EES based on the PLMN ID corresponding to the UE, the PLMN ID corresponding to the EES, and a capability of the EAS associated with the EES.

With reference to the fifth aspect, in some implementations of the fifth aspect, that the second ECS determines the EES based on the ECSP ID corresponding to the UE and an ECSP ID corresponding to the EES includes: The second ECS determines the EES based on the ECSP ID corresponding to the UE, the ECSP ID corresponding to the EES, and a capability of the EAS associated with the EES.

The capability of the EAS associated with the EES may include at least one of the PLMN ID corresponding to the EAS associated with the EES or the ECSP ID corresponding to the EAS associated with the EES.

With reference to the fifth aspect, in some implementations of the fifth aspect, the second ECS receives at least one of the PLMN ID corresponding to the EES or the ECSP ID corresponding to the EES from a first ECS, where the EES is an EES associated with the first ECS.

Optionally, the second ECS may further receive at least one of the PLMN ID corresponding to the first EAS or the ECSP ID corresponding to the first EAS from the first ECS.

With reference to the fifth aspect, in some implementations of the fifth aspect, the information for requesting to determine the first EAS for the UE includes at least one of the PLMN ID corresponding to the UE or the ECSP ID corresponding to the UE.

According to a sixth aspect, a device selection method is provided, and includes: UE sends, to a first ECS or a second ECS, information for requesting to determine an EES for the UE. The UE receives, from the first ECS or the second ECS, information for determining the EES for the UE. After the UE receives the information for requesting to determine the EES for the UE, the UE determines the EES based on at least one of a PLMN ID corresponding to the UE or an ECSP ID corresponding to the UE.

The first EES may include one or more EESs.

According to the foregoing solution, for beneficial effects, refer to the related descriptions of the second aspect. For brevity, details are not described herein in this application.

With reference to the sixth aspect, in some implementations of the sixth aspect, that the UE determines the EES based on at least one of a PLMN ID corresponding to the UE or an ECSP ID corresponding to the UE includes at least one of the following manners: The UE determines the EES based on the PLMN ID corresponding to the UE and a PLMN ID corresponding to the EES. Alternatively, the UE determines the EES based on the ECSP ID corresponding to the UE and an ECSP ID corresponding to the EES.

With reference to the sixth aspect, in some implementations of the sixth aspect, that the UE determines the EES based on the PLMN ID corresponding to the UE and a PLMN ID corresponding to the EES includes: The UE determines the EES based on the PLMN ID corresponding to the UE, the PLMN ID corresponding to the EES, and a capability of an EAS associated with the EES.

With reference to the sixth aspect, in some implementations of the sixth aspect, that the UE determines the EES based on the ECSP ID corresponding to the UE and an ECSP ID corresponding to the EES includes: The UE determines the EES based on the ECSP ID corresponding to the UE, the ECSP ID corresponding to the EES, and a capability of an EAS associated with the EES.

The capability of the EAS associated with the EES may include at least one of a PLMN ID corresponding to the EAS associated with the EES or an ECSP ID corresponding to the EAS associated with the EES.

With reference to the sixth aspect, in some implementations of the sixth aspect, the information for determining the EES for the UE includes at least one of the PLMN ID corresponding to the EES or the ECSP ID corresponding to the EES.

With reference to the sixth aspect, in some implementations of the sixth aspect, the UE sends, to the first ECS, the second ECS, or the EES, information for requesting to determine a first EAS for the UE. The UE receives, from the first ECS, the second ECS, or the EES, information for determining the first EAS for the UE. After the UE receives the information for determining the first EAS for the UE, the UE determines the first EAS based on at least one of the PLMN ID corresponding to the UE or the ECSP ID corresponding to the UE.

According to the foregoing solution, for beneficial effects, refer to the related descriptions of the second aspect. For brevity, details are not described herein in this application.

With reference to the sixth aspect, in some implementations of the sixth aspect, that the UE determines the first EAS based on at least one of the PLMN ID corresponding to the UE or the ECSP ID corresponding to the UE includes at least one of the following manners: The UE determines the first EAS based on the PLMN ID corresponding to the EAS associated with the EES and the PLMN ID corresponding to the UE. Alternatively, the UE determines the first EAS based on the ECSP ID corresponding to the EAS associated with the EES and the ECSP ID corresponding to the UE, where the first EAS is an EAS associated with the EES.

The first EAS may include one or more EASs.

With reference to the sixth aspect, in some implementations of the sixth aspect, the information for determining the first EAS for the UE includes at least one of the PLMN ID corresponding to the EAS associated with the EES or the ECSP ID corresponding to the EAS associated with the EES. Optionally, the information for determining the first EAS for the UE may further include at least one of a PLMN ID corresponding to the first EAS or an ECSP ID corresponding to the first EAS.

With reference to the sixth aspect, in some implementations of the sixth aspect, the information for requesting to determine the EES for the UE includes at least one of the PLMN ID corresponding to the UE or the ECSP ID corresponding to the UE.

According to a seventh aspect, a device selection method is provided, and includes: UE sends, to a first ECS, a second ECS, or an EES, information for requesting to determine a first EAS for the UE, where the first EAS is an EAS associated with the EES. The UE receives, from the first ECS, the second ECS, or the EES, information for determining the first EAS for the UE. After the UE receives the information for determining the first EAS for the UE, the UE determines the first EAS based on at least one of a PLMN ID corresponding to the UE or an ECSP ID corresponding to the UE.

The first EAS may include one or more EASs.

According to the foregoing solution, for beneficial effects, refer to the related descriptions of the second aspect. For brevity, details are not described herein in this application.

With reference to the seventh aspect, in some implementations of the seventh aspect, that the UE determines the first EAS based on at least one of a PLMN ID corresponding to the UE or an ECSP ID corresponding to the UE includes at least one of the following manners: The UE determines the first EAS based on a PLMN ID corresponding to the EAS associated with the EES and the PLMN ID corresponding to the UE. Alternatively, the UE determines the first EAS based on an ECSP ID corresponding to the EAS associated with the EES and the ECSP ID corresponding to the UE.

With reference to the seventh aspect, in some implementations of the seventh aspect, when the UE sends, to the first ECS or the second ECS, the information for requesting to determine the first EAS for the UE, the UE sends, to the first ECS or the second ECS, information for requesting to determine the EES for the UE. The UE receives, from the first ECS or the second ECS, information for determining the EES for the UE. After the UE receives the information for determining the EES for the UE, the UE determines the EES based on at least one of the PLMN ID corresponding to the UE or the ECSP ID corresponding to the UE.

According to the foregoing solution, for beneficial effects, refer to the related descriptions of the second aspect. For brevity, details are not described herein in this application.

With reference to the seventh aspect, in some implementations of the seventh aspect, that the UE determines the EES based on at least one of the PLMN ID corresponding to the UE or the ECSP ID corresponding to the UE includes at least one of the following manners: The UE determines the EES based on the PLMN ID corresponding to the UE and a PLMN ID corresponding to the EES. Alternatively, the UE determines the EES based on the ECSP ID corresponding to the UE and an ECSP ID corresponding to the EES.

With reference to the seventh aspect, in some implementations of the seventh aspect, that the UE determines the EES based on the PLMN ID corresponding to the UE and a PLMN ID corresponding to the EES includes: The UE determines the EES based on the PLMN ID corresponding to the UE, the PLMN ID corresponding to the EES, and a capability of the EAS associated with the EES.

The EES may include one or more EESs.

With reference to the seventh aspect, in some implementations of the seventh aspect, that the UE determines the EES based on the ECSP ID corresponding to the UE and an ECSP ID corresponding to the EES includes: The UE determines the EES based on the ECSP ID corresponding to the UE, the ECSP ID corresponding to the EES, and a capability of the EAS associated with the EES.

The capability of the EAS associated with the EES may include at least one of the PLMN ID corresponding to the EAS associated with the EES or the ECSP ID corresponding to the EAS associated with the EES. With reference to the seventh aspect, in some implementations of the seventh aspect, the information for determining the first EAS for the UE includes at least one of the PLMN ID corresponding to the EAS associated with the EES or the ECSP ID corresponding to the EAS associated with the EES.

Optionally, the information for determining the first EAS for the UE may further include at least one of a PLMN ID corresponding to the first EAS or an ECSP ID corresponding to the first EAS.

With reference to the seventh aspect, in some implementations of the seventh aspect, the information for requesting to determine the first EAS for the UE includes at least one of the PLMN ID corresponding to the UE or the ECSP ID corresponding to the UE.

According to an eighth aspect, a device selection method is provided, and includes: A first EAS receives, from an EES, information for requesting the first EAS to determine whether the first EAS has a capability of serving UE. After the first EAS receives the information for requesting the first EAS to determine whether the first EAS has the capability of serving the UE, the first EAS determines, based on at least one of a PLMN ID corresponding to the UE or an ECSP ID corresponding to the UE, that the first EAS has the capability of serving the UE. The first EAS sends, to the EES, information indicating that the first EAS has the capability of serving the UE.

According to the foregoing solution, after the first EAS receives the information for determining whether the first EAS has the capability of serving the UE, the first EAS determines, based on at least one of the PLMN ID corresponding to the UE or the ECSP ID corresponding to the UE, that the first EAS has the capability of serving the UE, and sends, to the EES, the information indicating that the first EAS has the capability of serving the UE. In addition, the first EAS selected for the UE supports a service of the UE. This avoids a problem that the service is affected because an EAS cannot meet the service of the UE, and improves user experience.

With reference to the eighth aspect, in some implementations of the eighth aspect, that the first EAS determines, based on at least one of a PLMN ID corresponding to the UE or an ECSP ID corresponding to the UE, that the first EAS has the capability of serving the UE includes at least one of the following manners: The first EAS determines, based on the PLMN ID corresponding to the UE and a PLMN ID corresponding to the first EAS, that the first EAS has the capability of serving the UE. Alternatively, the first EAS determines, based on the ECSP ID corresponding to the UE and an ECSP ID corresponding to the first EAS, that the first EAS has the capability of serving the UE.

Specifically, if the first EAS has the capability of serving the UE, the first EAS may send success information or acknowledgment information to the EES, where the success information or the acknowledgment information indicates that the first EAS has the capability of serving the UE. If the first EAS has no capability of serving the UE, the first EAS sends failure information to the EES, where the failure information indicates that the first EAS has no capability of serving the UE. Optionally, the failure information may carry a failure cause indication, to indicate that the first EAS cannot provide a service for the UE.

With reference to the eighth aspect, in some implementations of the eighth aspect, the first EAS receives at least one of the PLMN ID corresponding to the UE or the ECSP ID corresponding to the UE from the EES or a core network element.

For example, the first EAS may subscribe to a PLMN change (change) event from a 5G core network (5GC). To be specific, the EES may subscribe to information about the PLMN change event from a session management function (Session management function, SMF) network element, or the first EAS may subscribe to the PLMN change event from the SMF via a network element function (Network element function, NEF) network element. Then, when the SMF detects a PLMN change event of the UE, the SMF may send a PLMN change event notification message to the first EAS, where the PLMN change event notification message may carry at least one of a UE home PLMN or a UE serving PLMN.

Further, the first EAS may obtain ECSP information of the UE from a unified data management (Unified data management, UDM) network element via the SMF.

According to a ninth aspect, a device selection method is provided, and includes: An EES receives at least one of a PLMN ID corresponding to a first EAS or an ECSP ID corresponding to the first EAS from the first EAS, where the first EAS is any one of EASs associated with the EES.

With reference to the ninth aspect, in some implementations of the ninth aspect, the EES sends at least one piece of the following information to a first ECS: the PLMN ID corresponding to the first EAS, the ECSP ID corresponding to the first EAS, a PLMN ID corresponding to the EES, or an ECSP ID corresponding to the EES.

With reference to the ninth aspect, in some implementations of the ninth aspect, when the at least one piece of information includes at least one of the PLMN ID corresponding to the EES and the ECSP ID corresponding to the EES, the method further includes any one of the following: The EES determines, based on the PLMN ID corresponding to the first EAS, the PLMN ID corresponding to the EES. Alternatively, the EES determines, based on the ECSP ID corresponding to the first EAS, the ECSP ID corresponding to the EES.

With reference to the ninth aspect, in some implementations of the ninth aspect, the EES receives at least one of a PLMN ID corresponding to UE and an ECSP ID corresponding to the UE from a core network element.

Specifically, the EES may subscribe to a PLMN change (change) event from a 5G core network (5GC). To be specific, the EES may subscribe to information about the PLMN change event from a session management function (Session management function, SMF) network element, or the EES may subscribe to the PLMN change event from the SMF via a network element function (Network element function, NEF) network element. Then, when the SMF detects a PLMN change event of the UE, the SMF may send a PLMN change event notification message to the EES, where the PLMN change event notification message may carry at least one of a UE home PLMN or a UE serving PLMN.

Further, the EES may obtain ECSP information of the UE from a unified data management (Unified data management, UDM) network element via the SMF.

With reference to the ninth aspect, in some implementations of the ninth aspect, the EES receives at least one of the PLMN ID corresponding to the UE and the ECSP ID corresponding to the UE from the UE.

With reference to the ninth aspect, in some implementations of the ninth aspect, the first EAS sends at least one of the PLMN ID corresponding to the first EAS and the ECSP ID corresponding to the first EAS to the EES.

According to a tenth aspect, a communication apparatus is provided. The apparatus is configured to perform the method provided in any one of the first aspect to the ninth aspect. Specifically, the apparatus may include a unit and/or a module configured to perform the method provided in any one of the first aspect or the foregoing implementations of the first aspect, any one of the second aspect or the foregoing implementations of the second aspect, any one of the third aspect or the foregoing implementations of the third aspect, any one of the fourth aspect or the foregoing implementations of the fourth aspect, any one of the fifth aspect or the foregoing implementations of the fifth aspect, any one of the sixth aspect or the foregoing implementations of the sixth aspect, any one of the seventh aspect or the foregoing implementations of the seventh aspect, any one of the eighth aspect or the foregoing implementations of the eighth aspect, or any one of the ninth aspect or the foregoing implementations of the ninth aspect, for example, a processing unit and/or a communication unit.

In an implementation, the apparatus is an EES. When the apparatus is the EES, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the EES. When the apparatus is the chip, the chip system, or the circuit used in the EES, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a first ECS. When the apparatus is the first ECS, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first ECS. When the apparatus is the chip, the chip system, or the circuit used in the first ECS, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a second ECS. When the apparatus is the second ECS, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the second ECS. When the apparatus is the chip, the chip system, or the circuit used in the second ECS, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is UE. When the apparatus is the UE, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the UE. When the apparatus is the chip, the chip system, or the circuit used in the UE, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a first EAS. When the apparatus is the first EAS, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first EAS. When the apparatus is the chip, the chip system, or the circuit used in the first EAS, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to an eleventh aspect, a communication apparatus is provided. The apparatus includes: a memory, configured to store a program; and at least one processor, configured to execute the computer program or instructions stored in the memory, to perform the method provided in any one of the first aspect or the foregoing implementations of the first aspect, any one of the second aspect or the foregoing implementations of the second aspect, any one of the third aspect or the foregoing implementations of the third aspect, any one of the fourth aspect or the foregoing implementations of the fourth aspect, any one of the fifth aspect or the foregoing implementations of the fifth aspect, any one of the sixth aspect or the foregoing implementations of the sixth aspect, any one of the seventh aspect or the foregoing implementations of the seventh aspect, any one of the eighth aspect or the foregoing implementations of the eighth aspect, or any one of the ninth aspect or the foregoing implementations of the ninth aspect.

In an implementation, the apparatus is an EES.

In another implementation, the apparatus is a chip, a chip system, or a circuit used in the EES.

In an implementation, the apparatus is a first ECS.

In another implementation, the apparatus is a chip, a chip system, or a circuit used in the first ECS.

In an implementation, the apparatus is a second ECS.

In another implementation, the apparatus is a chip, a chip system, or a circuit used in the second ECS.

In an implementation, the apparatus is UE.

In another implementation, the apparatus is a chip, a chip system, or a circuit used in the UE.

In an implementation, the apparatus is a first EAS.

In another implementation, the apparatus is a chip, a chip system, or a circuit used in the first EAS.

According to a twelfth aspect, this application provides a processor, configured to perform the methods provided in the foregoing aspects.

Operations such as sending and obtaining/receiving related to the processor may be understood as operations such as output and receiving or input of the processor, or may be understood as operations such as sending and receiving performed by a radio frequency circuit and an antenna, unless otherwise specified, or provided that the operations do not contradict actual functions or internal logic of the operations in related descriptions. This is not limited in this application.

According to a thirteenth aspect, a computer-readable storage medium is provided. The computer-readable medium stores program code executed by a device, and the program code is used to perform the method provided in any one of the first aspect or the foregoing implementations of the first aspect, any one of the second aspect or the foregoing implementations of the second aspect, any one of the third aspect or the foregoing implementations of the third aspect, any one of the fourth aspect or the foregoing implementations of the fourth aspect, any one of the fifth aspect or the foregoing implementations of the fifth aspect, any one of the sixth aspect or the foregoing implementations of the sixth aspect, any one of the seventh aspect or the foregoing implementations of the seventh aspect, any one of the eighth aspect or the foregoing implementations of the eighth aspect, or any one of the ninth aspect or the foregoing implementations of the ninth aspect.

According to a fourteenth aspect, a computer program product including instructions is provided. When the computer program product runs on a computer, the computer is enabled to perform the method provided in any one of the first aspect or the foregoing implementations of the first aspect, any one of the second aspect or the foregoing implementations of the second aspect, any one of the third aspect or the foregoing implementations of the third aspect, any one of the fourth aspect or the foregoing implementations of the fourth aspect, any one of the fifth aspect or the foregoing implementations of the fifth aspect, any one of the sixth aspect or the foregoing implementations of the sixth aspect, any one of the seventh aspect or the foregoing implementations of the seventh aspect, any one of the eighth aspect or the foregoing implementations of the eighth aspect, or any one of the ninth aspect or the foregoing implementations of the ninth aspect.

According to a fifteenth aspect, a chip is provided. The chip includes a processor and a communication interface. The processor reads, through the communication interface, instructions stored in a memory, to perform the method provided in any one of the first aspect or the foregoing implementations of the first aspect, any one of the second aspect or the foregoing implementations of the second aspect, any one of the third aspect or the foregoing implementations of the third aspect, any one of the fourth aspect or the foregoing implementations of the fourth aspect, any one of the fifth aspect or the foregoing implementations of the fifth aspect, any one of the sixth aspect or the foregoing implementations of the sixth aspect, any one of the seventh aspect or the foregoing implementations of the seventh aspect, any one of the eighth aspect or the foregoing implementations of the eighth aspect, or any one of the ninth aspect or the foregoing implementations of the ninth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the first aspect or the foregoing implementations of the first aspect, any one of the second aspect or the foregoing implementations of the second aspect, any one of the third aspect or the foregoing implementations of the third aspect, any one of the fourth aspect or the foregoing implementations of the fourth aspect, any one of the fifth aspect or the foregoing implementations of the fifth aspect, any one of the sixth aspect or the foregoing implementations of the sixth aspect, any one of the seventh aspect or the foregoing implementations of the seventh aspect, any one of the eighth aspect or the foregoing implementations of the eighth aspect, or any one of the ninth aspect or the foregoing implementations of the ninth aspect.

According to a sixteenth aspect, a device selection system is provided, and includes one or more of the following execution bodies:
the foregoing EES, UE, first ECS, second ECS, or first EAS.

### BRIEF DESCRIPTION OF DRAWINGS

FIG. 1 is a schematic of a network architecture;
FIG. 2 is a diagram of a method 200 for selecting an edge enabler server and an edge application server;
FIG. 3 is another schematic of a network architecture;
FIG. 4 is a diagram of a device selection method 400 according to an embodiment of this application;
FIG. 5 is a diagram of a device selection method 500 according to an embodiment of this application;
FIG. 6 is a diagram of a device selection method 600 according to an embodiment of this application;
FIG. 7 is a diagram of a device selection method 700 according to an embodiment of this application;
FIG. 8 is a diagram of a device selection method 800 according to an embodiment of this application;
FIG. 9 is a diagram of a device selection method 900 according to an embodiment of this application;
FIG. 10 is a diagram of a device selection method 1000 according to an embodiment of this application;
FIG. 11 is a diagram of a device selection method 1100 according to an embodiment of this application;
FIG. 12 is a diagram of a device selection method 1200 according to an embodiment of this application;
FIG. 13 is a block schematic of a communication apparatus 1300 according to an embodiment of this application;
FIG. 14 is a block schematic of a communication apparatus 1400 according to an embodiment of this application;
FIG. 15 is a simplified schematic of a structure of a terminal device 1500; and
FIG. 16 is a simplified schematic of a structure of a network device 1600.

### DESCRIPTION OF EMBODIMENTS

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

First, a network architecture applicable to this application is briefly described as follows.

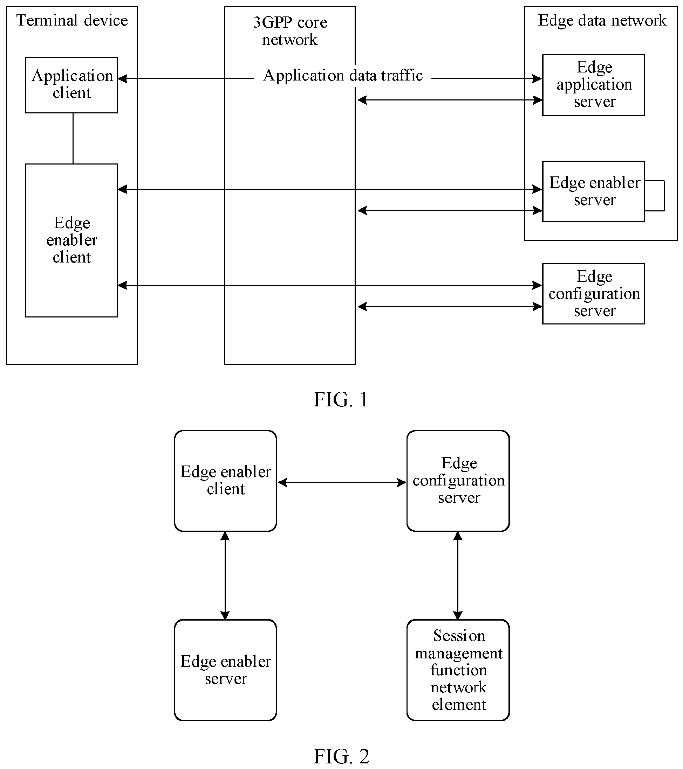

In an example, FIG. 1 is a schematic of a network architecture.

As shown in FIG. 1, a multi-access edge computing (multi-access edge computing, MEC) application network is used as an example in the network architecture. The network architecture may include but is not limited to: a terminal device, a 3rd generation partnership project (3rd generation partnership project, 3GPP) core network, an edge data network (edge data network, EDN), and an edge configuration server (edge configuration server, ECS). The terminal device may include an application client (application client(s)) and an edge enabler client (edge enabler client, EEC). The edge data network may include an edge application server (edge application server(s), EAS) and an edge enabler server (edge enabler server(s), EES).

The following briefly describes network elements shown in FIG. 1.
1. The terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device that has a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device, another processing device connected to a wireless modem, a wearable device, a terminal device in a 5G network, a terminal device in a future evolved public land mobile network (public land mobile network, PLMN), and the like. This is not limited in this embodiment of this application.

By way of example and not limitation, in this embodiment of this application, the terminal device may alternatively be the wearable device. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that is directly worn on a body or integrated into clothes or an accessory of the user. The wearable device is not merely a hardware device, but is also used to implement a powerful function through software support, data exchange, and cloud interaction. In a broad sense, the wearable intelligent device includes a full-featured and large-sized device that can implement all or some functions without depending on a smartphone, for example, a smart watch or smart glasses, and includes devices that are dedicated to only one type of application function and need to collaboratively work with other devices such as smartphones, for example, various smart bands or smart jewelry for monitoring physical signs.

In addition, in this embodiment of this application, the terminal device may alternatively be a terminal device in an IoT system. IoT is an important part of future information technology development. A main technical feature of the IoT is to connect articles to a network by using a communication technology, to implement an intelligent network for human-machine interconnection and thing-thing interconnection.

It should be noted that the terminal device and an access network device may communicate with each other by using an air interface technology (for example, an NR technology or an LTE technology). Terminal devices may also communicate with each other by using an air interface technology (for example, the NR technology or the LTE technology).

In this embodiment of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete device.

2. Edge data network: In an understanding, the EDN includes only one data network, and is a local data network (local data network, local DN). The EDN includes an edge enabler function, may be identified by a data network access identifier (data network access identifier, DNAI) and a data network name (data network name, application instance/edge), and is a network logical concept. In another understanding, the EDN is a peer concept of a central cloud, and may be understood as a local data center (geographical location concept). The EDN may be identified by the DNAI, and may include a plurality of local data networks.

3. The application instance/edge application is an application deployed in the edge data network, and may specifically be an application program (for example, social media software, augmented reality (augmented reality, AR), or virtual reality (virtual reality, VR)) of a server, or an instance (instance) deployed to run in the EDN. One or more EASs may be deployed for one application instance/edge application in one or more EDNs. EASs deployed to run in different EDNs may be considered as different EASs of one application instance/edge application. The EASs may share one domain name, and may use one IP address, or may use different internet protocol (internet protocol, IP) addresses.

In addition, the application instance/edge application may also be referred to as an edge application (server), an EAS, an edge application instance, a MEC application (server), an EAS function, or the like.

4. The application client is a peer entity of the edge application on a terminal device side. The application client is used by an application user (user) to obtain an application service from an application server. The application client is a client program of an application on the terminal device side. The application client may be connected to an application server on a cloud to obtain an application service, or may be connected to an EAS deployed to run in one or more EDNs to obtain an application service.

5. The edge enabler server may be deployed in the application instance in the EDN, to provide some enabler capabilities, and may better support deployment of an application in the MEC. The edge enabler server may support registration of the edge application, and authentication and authorization on the terminal device, and provide an IP address of the application instance and other information for the terminal device. The edge enabler server may further obtain an identifier and the IP address of the application instance, and then send the identifier and the IP address of the application instance to an edge data network configuration server.

In addition, the EES is deployed in the EDN. Usually, the EAS is registered with one EES, or information about one EAS is configured on one EES via a management system. The EES is referred to as an EES associated with the EAS, or the EES controls/manages the EAS registered with/configured on the EES.

6. Edge enabler client (edge enabler client, EEC): The EEC is used to register information about the EEC and information about the application client with the EES, perform security authentication and authorization, obtain an IP address of the EAS from the EES, and provide an edge computing enabler capability (for example, providing an EAS discovery service, and returning the IP address of the EAS to the application client) for the application client. The EEC is a peer entity of the EES on the terminal device side.

7. The edge configuration server (edge configuration server, ECS) may be responsible for EDN configuration (for example, providing information about the EES for the terminal device), and may further directly provide information about the application instance for the terminal device, or exchange information with a domain name server (domain name server, DNS) of the application, to obtain the information about the application instance. Further, the information about the application instance and the IP address may be obtained from another function entity and stored.

The terminal device signs a service agreement with an application provider, to provide a service for the terminal device. The terminal device may log in to the application client on the terminal device, and communicate with the EAS via the application client. The edge enabler client is a middle layer, and is usually located in an operating system or located between the application client and the operating system. The application client may obtain an edge enabler service from the edge enabler client through an application programming interface (application programming interface, API).

For ease of understanding embodiments of this application, edge computing and related procedures in this application are explained.

The edge computing is an open platform that integrates core capabilities of a network, computing, storage, and an application at a network edge side close to objects or data sources, and provides edge intelligence services nearby, to meet key requirements of industry digitalization in terms of agile connection, real-time services, data optimization, application intelligence, security and privacy protection, and the like. In other words, the edge computing is to directly analyze, in a local device or a network that is close to data generation, data collected from the terminal device, without transmitting the data to a cloud data processing center.

Multi-access edge computing may provide services and cloud computing functions nearby by using a radio access network, to create a carrier-class service environment with high performance, low latency, and high bandwidth. This accelerates download of content, services, and applications on the network, and enables a consumer to enjoy uninterrupted network experience with high quality.

The local data network is an access point (access point) of a data network that is close to an attachment point (attachment point) of a user.

The data network is a service network of an operator or a third party, and may provide services, such as an operator service and an internet service, for the terminal device.

FIG. 2 is a diagram of a method 200 for selecting an edge enabler server and an edge application server. As shown in FIG. 2, the method 200 may include the following steps.

S201: An edge enabler client selects an edge enabler server platform from an edge configuration server.

This step may specifically include:
1. The edge enabler client requests or subscribes to an edge enabler server corresponding to a location of a terminal device from the edge configuration server, and the edge enabler client selects an edge enabler server enabler platform or an edge data network of interest from the edge configuration server.
2. An EDN CS platform has detailed information about an application instance. A DNAI is obtained based on the location of the terminal device, and an appropriate edge enabler server is selected for each application based on the DNAI, a fully qualified domain name (fully qualified domain name, FQDN), and an edge enabler server profile (profile). In addition, the edge enabler server platform may be selected based on the location of the terminal device and another optional filter (filter).
3. A current/potential DNAI is obtained.
4. The edge enabler client obtains information about one or more edge enabler servers from the edge configuration server.

S202: The edge enabler client selects an edge application instance of the edge application server from the edge enabler server.

This step may specifically include:
1. The edge enabler client requests, from the edge enabler server, an edge application instance to be accessed.
2. Based on information about a locally registered/online edge application instance and a discovery filtering parameter provided by a user, the edge enabler server performs matching between information about a registered application and an edge application instance that meets a user request. If there are a plurality of edge application instances that meet the user request, the plurality of edge application instances may be returned.
3. The edge enabler server returns information about the edge application server to the edge enabler client, and then the edge enabler client may provide the edge application instance for an application client, so that the application client connects to the edge application instance.

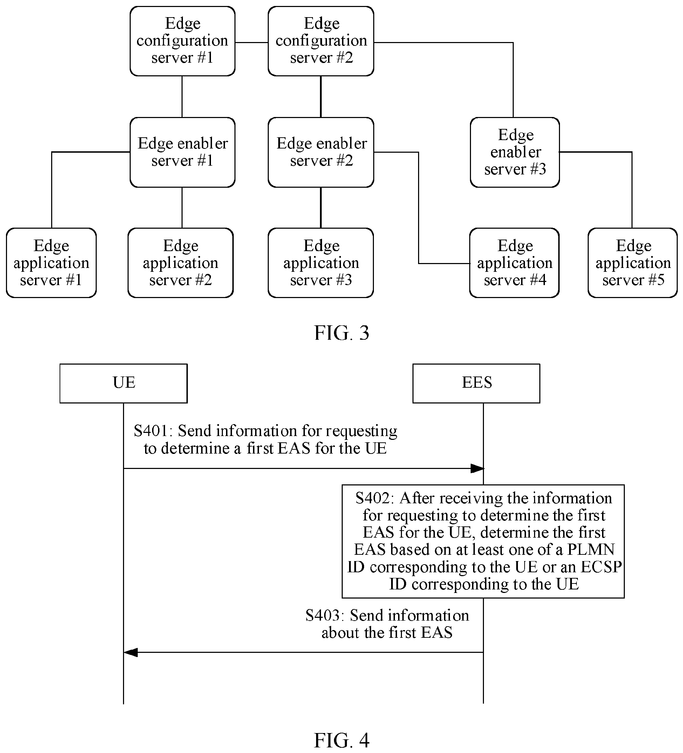

FIG. 3 is another schematic of a network architecture. An edge configuration server #1, an edge enabler server #1, an edge application server #1, an edge application server #2, and an edge application server #3 are operated by an operator A. An edge configuration server #2, an edge enabler server #2, an edge enabler server #3, an edge application server #4, and an edge application server #5 are operated by an operator B.

As shown in FIG. 3, in a cross-operator or cross-ECSP deployment scenario, the operator A or an edge computing service provider A may request, through a joint interface between operators or edge computing service providers, the operator B or an edge computing service provider B to deploy some applications (for example, the edge application server #3). A specific deployment location of the edge application server #3 is in a network of the operator B or the edge computing service provider B.

Specifically, an application service provider may subscribe to the operator A or the edge computing service provider A. To ensure that the operator A or the edge computing service provider A can provide a service for a roaming user of the application service provider in a network V (a network in which the operator B or the edge computing service provider B is located), the operator A or the edge computing service provider A may further subscribe to the operator B or the edge computing service provider B, and may lease an edge application server or a hardware resource in the network of the operator B or the edge computing service provider B, or request the operator B or the edge computing service provider B to deploy an application instance or an edge application server needed by the operator A or the edge computing service provider A.

However, when an edge configuration server of the operator B or the edge computing service provider B selects an edge enabler server and the selected edge enabler server further selects an edge application server, it cannot be ensured that the edge application server has a capability of providing a service for the roaming user.

In view of this, this application provides a device selection method and an apparatus thereof, to resolve the foregoing problem.

To better understand embodiments of this application, the following several points are described herein:
1. In this application, a PLMN ID corresponding to UE may be at least one of a UE home PLMN ID (UE home PLMN ID), a UE serving PLMN ID (UE serving PLMN ID), an ID of a PLMN in which the UE is located, an ID of a PLMN supported by the UE, an ID of a PLMN in which the UE is deployed, or an ID of a PLMN specified by the UE. An ECSP ID corresponding to the UE may be at least one of a UE home ECSP ID (UE home ECSP ID), a UE serving ECSP ID (UE serving ECSP ID), an ID of an ECSP in which the UE is located, an ID of an ECSP supported by the UE, an ID of a PLMN preferentially selected by the UE, an ID of an ECSP preferentially selected by the UE, or an ID of an ECSP specified by the UE.
2. In this application, a PLMN ID corresponding to an EAS may be at least one of an EAS home (or belonging) PLMN ID (EAS home PLMN ID), an EAS serving PLMN ID (EAS serving PLMN ID), an ID of a PLMN in which the EAS is located, an ID of a PLMN supported by the EAS, an ID of a PLMN in which the EAS is deployed, or an ID of a PLMN specified by the EAS. An ECSP ID corresponding to the EAS may be at least one of an EAS home (or belonging) ECSP ID (EAS home ECSP ID), an EAS serving ECSP ID (EAS serving ECSP ID), an ID of an ECSP in which the EAS is located, an ID of an ECSP supported by the EAS, an ID of an ECSP in which the EAS is deployed, or an ID of an ECSP specified by the EAS.
3. In this application, a PLMN ID corresponding to an EES may be at least one of an EES home PLMN ID (EES home PLMN ID), an EES serving PLMN ID (EES serving PLMN ID), an ID of a PLMN in which the EES is located, an ID of a PLMN supported by the EES, an ID of a PLMN in which the EES is deployed, or an ID of a PLMN specified by the EES. An ECSP ID corresponding to the EES may be at least one of an EES home ECSP ID (EES home ECSP ID), an EES serving ECSP ID (EES serving ECSP ID), an ID of an ECSP in which the EES is located, an ID of an ECSP supported by the EES, an ID of an ECSP in which the EES is deployed, or an ID of an ECSP specified by the EES.
   The PLMN ID corresponding to the EES is determined based on a PLMN ID corresponding to any EAS associated with the EES, and the ECSP ID corresponding to the EES may also be determined based on an ECSP ID corresponding to any EAS associated with the EES.
4. In this application, because an EEC is a peer entity on a UE side, although embodiments of this application are written by using the UE as an execution body, the execution body of the UE may alternatively be replaced with an execution body of the EEC.
5. In this application, the EES may be replaced with an edge enabler server, a first ECS may be replaced with a first edge configuration server, a second ECS may be replaced with a second edge configuration server, a first EAS may be replaced with a first edge application server, and the EEC may be replaced with an edge enabler client.
6. In embodiments of this application, the first ECS may be an ECS in a network to which the UE roams, the EES may be an EES associated with the first ECS, the first EAS may be an EAS associated with the EES, and the second ECS may be an ECS in a UE home network.
7. In embodiments of this application, the user equipment (UE) may include one or more application clients (Application clients, ACs) and an edge enabler client (EEC). The user equipment may establish a connection to an edge data network via the application client and/or the edge enabler client, to obtain an application service.
8. In embodiments of this application, an EAS associated with the EES may also be referred to as an EAS managed by the EES, and may be an EAS registered with the EES. An EES associated with the ECS may also be referred to as an EES managed by the ECS, and may be an EES registered with the ECS.
9. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.
10. The following embodiments described in this specification may be independent solutions, or may be combined based on internal logic. All these solutions fall within the protection scope of this application. It should be understood that terms in embodiments may also be mutually referenced.

FIG. 4 is a diagram of a device selection method 400 according to an embodiment of this application. As shown in FIG. 4, the method 400 may include the following steps.

S401: UE sends, to an EES, information for requesting to determine a first EAS for the UE. Correspondingly, the EES receives, from the UE, the information for requesting to determine the first EAS for the UE.

Specifically, the information for requesting to determine the first EAS for the UE includes at least one of PLMN ID information corresponding to the UE or ECSP ID information corresponding to the UE. The first EAS may include one or more EASs. In an example, the PLMN ID information corresponding to the UE may be a UE home PLMN ID, and the ECSP ID corresponding to the UE may be a UE home ECSP ID.

In an implementation, the information for requesting to determine the first EAS for the UE may further include location information of the UE, identity information of the UE, application client profile (AC profile) information, and/or the like.

The information for requesting to determine the first EAS for the UE may be carried in any message between the UE and the EES. For example, the information for requesting to determine the first EAS for the UE may be carried in any one of the following messages:
an EAS discovery request (EAS discovery request), an EAS discovery subscription request (EAS discovery subscription request), an EAS discovery subscription update request (EAS discovery subscription update request), or a service discovery request.

S402: After the EES receives the information for requesting to determine the first EAS for the UE, the EES determines the first EAS based on at least one of the PLMN ID corresponding to the UE or the ECSP ID corresponding to the UE.

Specifically, the EES may determine the first EAS in at least one of the following manners.

In a possible implementation, the EES may determine the first EAS based on a PLMN ID corresponding to an EAS associated with the EES and the PLMN ID corresponding to the UE.

Specifically, the EES may match a PLMN ID corresponding to each EAS associated with the EES with the PLMN ID corresponding to the UE. If the PLMN ID corresponding to the EAS includes the PLMN ID corresponding to the UE, it is considered that the matching succeeds, and it may be determined that the successfully matched EAS is the first EAS.

For example, if PLMN IDs corresponding to one or more EASs associated with the EES are {12, 34, and 56}, and the PLMN ID corresponding to the UE is {12}, it may be considered that the one or more EASs are the first EAS.

In another possible implementation, the EES may determine the first EAS based on an ECSP ID corresponding to an EAS associated with the EES and the ECSP ID corresponding to the UE.

Specifically, the EES may match an ECSP ID corresponding to each EAS associated with the EES with the ECSP ID corresponding to the UE. If the ECSP ID corresponding to the EAS includes the ECSP ID corresponding to the UE, it is considered that the matching succeeds, and it may be determined that the successfully matched EAS is the first EAS.

For example, if ECSP IDs corresponding to one or more EASs associated with the EES are {13, 35, and 52}, and the ECSP ID corresponding to the UE is {35}, it may be considered that the one or more EASs are the first EAS.

Further, the EES may determine the first EAS based on at least one of the PLMN ID corresponding to the UE, the ECSP ID corresponding to the UE, or a service requested by the UE, and information about a service supported by the EAS associated with the EES.

Specifically, the EES may match a service supported by each EAS associated with the EES with at least one of the PLMN ID corresponding to the UE, the ECSP ID corresponding to the UE, or the service requested by the UE. If the matching succeeds, it is determined that the successfully matched EAS is the first EAS.

It should be understood that the first EAS is an EAS associated with the EES. In other words, the first EAS is one or more of EASs associated with the EES.

It should be further understood that the EES may match each EAS associated with the EES with the UE, and finally use all successfully matched EASs as first EASs; or when an EAS associated with the EES successfully matches the UE, the EAS may be used as the first EAS, and matching is stopped.

S403: The EES sends information about the first EAS to the UE. Correspondingly, the UE receives the information about the first EAS from the EES.

The information about the first EAS may include one or more pieces of the following information: identification information of the first EAS, endpoint information (for example, an endpoint address like a uniform resource identifier, an internet protocol, or a fully qualified domain name) of the first EAS, and a PLMN ID of the first EAS or an ECSP ID of the first EAS.

Specifically, the information about the first EAS may include the identification information of the first EAS. Further, the information about the first EAS may include at least one of an indication about whether the first EAS supports providing a service for the roaming UE, the PLMN ID corresponding to the first EAS, or the ECSP ID corresponding to the first EAS.

In an implementation, the EES may send a response message to the UE, where the response message includes the information about the first EAS. Specifically, the response message may be an EAS discovery response (EAS discovery response) message, an EAS discovery subscription response (EAS discovery subscription response) message, an EAS discovery subscription update response (EAS discovery subscription update response) message, a service discovery response message, or the like.

In an optional manner, the EES may alternatively not determine the first EAS. In other words, step 402 and step 403 may not be performed. In this case, the method is as follows: The EES determines the EAS associated with the EES, and sends information (including information about whether each EAS associated with the EES supports serving the roaming terminal device, for example, at least one of a PLMN ID corresponding to the EAS or an ECSP ID corresponding to the EAS) about the EAS associated with the EES to the UE. Therefore, after receiving the foregoing information, the UE may determine the first EAS based on at least one of the PLMN ID corresponding to the UE or the ECSP ID corresponding to the UE. For a specific method for determining the first EAS by the UE, refer to related descriptions of the following method 1000.

In this application, the EES may determine, based on one or more of the location information of the UE, an EAS discovery filter (EAS discovery filter), an ECSP policy, and other parameters, the EAS associated with the EES.

In addition, if none of the EASs associated with the EES has a capability of serving the UE, the EES sends failure information to the UE, where the failure information indicates that no EAS has the capability of serving the UE. Optionally, the failure information may carry a failure cause indication, to indicate that no EAS can provide a service for the UE.

Optionally, to register with a first ECS, the method 400 further includes: The EES sends at least one piece of the following information to the first ECS:
the PLMN ID corresponding to the first EAS, the ECSP ID corresponding to the first EAS, a PLMN ID corresponding to the EES, or an ECSP ID corresponding to the EES.

The foregoing at least one piece of information may identify whether the first EAS can provide a service for the roaming UE, whether the first EAS can provide a service for a user of a partner ECSP, whether the EES can provide a service for the roaming UE, whether the EES can provide a service for the user of the partner ECSP, or whether the EAS associated with the EES can provide a service for the roaming UE or provide a service for the user of the partner ECSP.

In an implementation, the EES may send a service registration request message to the first ECS, where the service registration request message includes the foregoing at least one piece of information.

In addition, the foregoing at least one piece of information may alternatively be carried in any other message between the EES and the first ECS. This is not limited herein in this application.

Further, when the foregoing information may include at least one of the PLMN ID information corresponding to the EES or the ECSP ID corresponding to the EES, the method 400 further includes at least one of the following:

In a possible implementation, the EES may determine, based on the PLMN ID corresponding to the first EAS, the PLMN ID corresponding to the EES.

For example, the EES may use a union set of an EES home PLMN ID and an ID of a PLMN supported by the first EAS as an ID of a PLMN supported by the EES.

For example, the EES may use a union set of a serving PLMN ID before registration of the first EAS and a first EAS serving PLMN ID as an EES serving PLMN ID after the registration of the first EAS.

In another possible implementation, the EES may determine, based on the ECSP ID corresponding to the first EAS, the ECSP ID corresponding to the EES.

For example, the EES may use a union set of an EES home ECSP ID and an ID of an ECSP supported by the first EAS as an ID of an ECSP supported by the EES.

For example, the EES may use a union set of a serving ECSP ID before registration of the first EAS and a first EAS serving ECSP ID as an EES serving ECSP ID after the registration of the first EAS.

In addition, after the EES sends the service registration request message to the first ECS, the EES may receive a registration (update) response message from the first ECS.

Optionally, the first ECS may send at least one of a PLMN supported by the first ECS or an ECSP supported by the first ECS to a second ECS. Further, the first ECS may send at least one of the PLMN ID corresponding to the EES, the ECSP ID corresponding to the EES, the PLMN ID corresponding to the first EAS, or the ECSP ID corresponding to the first EAS to the second ECS.

To implement step 402, this application further provides a method for obtaining at least one of the PLMN ID corresponding to the UE or the ECSP ID corresponding to the UE by the EES. In this case, the method 400 may further include: The EES receives at least one of the PLMN ID corresponding to the UE or the ECSP ID corresponding to the UE from a core network element. Correspondingly, the core network element sends at least one of the PLMN ID corresponding to the UE or the ECSP ID corresponding to the UE to the EES.

Specifically, the EES may subscribe to a PLMN change (change) event from a 5G core network (5GC). To be specific, the EES may subscribe to information about the PLMN change event from a session management function (Session management function, SMF) network element, or the EES may subscribe to the PLMN change event from the SMF via a network element function (Network element function, NEF) network element. Then, when the SMF detects a PLMN change event of the UE, the SMF may send a PLMN change event notification message to the EES, where the PLMN change event notification message may carry at least one of a UE home PLMN or a UE serving PLMN.

Further, the EES may obtain ECSP information of the UE from a unified data management (Unified data management, UDM) network element via the SMF.

It should be understood that, in this case, the EES may obtain, via the core network element, at least one of the PLMN ID corresponding to the UE or the ECSP ID corresponding to the UE. The information for requesting to determine the first EAS for the UE in step S401 may not include at least one of the PLMN ID information corresponding to the UE or the ECSP ID information corresponding to the UE.

To implement step 402, this application further provides a method for obtaining at least one of the PLMN ID corresponding to the first EAS or the ECSP ID corresponding to the first EAS by the EES. In this case, the method 400 may further include: The EES receives at least one of the PLMN ID corresponding to the first EAS or the ECSP ID corresponding to the first EAS from the first EAS. Correspondingly, the first EAS sends at least one of the PLMN ID corresponding to the first EAS or the ECSP ID corresponding to the first EAS to the EES.

The at least one piece of information may identify whether the first EAS can provide a service for the roaming UE, and/or whether the first EAS can provide a service for the user of the partner ECSP.

In a possible implementation, the first EAS may send an EAS registration request (EAS registration (update) request) message to the EES, where the EAS registration request message carries at least one of the PLMN ID corresponding to the first EAS or the ECSP ID corresponding to the first EAS. Further, the foregoing information may be stored in an EAS profile (EAS profile).

In addition, at least one of the PLMN ID corresponding to the first EAS or the ECSP ID corresponding to the first EAS may alternatively be carried in any one of the following messages, and a specific carrying message is not limited:
a UE location (update) request (UE location (update) request), a UE location subscribe (update) request (UE location subscribe (update) request), an application context relocation management event (update) subscribe request (Application context relocation management event (update) subscribe request, ACR management event (update) subscribe request), an application client information subscription (update) request (AC information subscription (update) request), a UE identifier application programming interface (update) request (UE identifier application programming interface (update) request, UE identifier API (update) request), and a session with quality of service create (update) request (Session with QoS create (update) request).

Optionally, after receiving the registration request message, the EES may store information included in the registration request message, and send a registration (update) response message to the first EAS.

In an implementation, the EES may receive information from all EASs associated with the EES. For ease of description, all the EASs associated with the EES may be referred to as second EASs. The second EAS may include the first EAS.

For example, the EES may receive at least one of a PLMN ID corresponding to the second EAS or an ECSP ID corresponding to the second EAS.

According to the foregoing solution, the EES selects the first EAS for the UE based on at least one of the PLMN ID of the UE or the ECSP ID of the UE, and the first EAS selected by the EES for the UE supports a service of the UE. This avoids a problem that the service is affected because an EAS obtained by the EES cannot meet the service of the UE, and improves user experience.

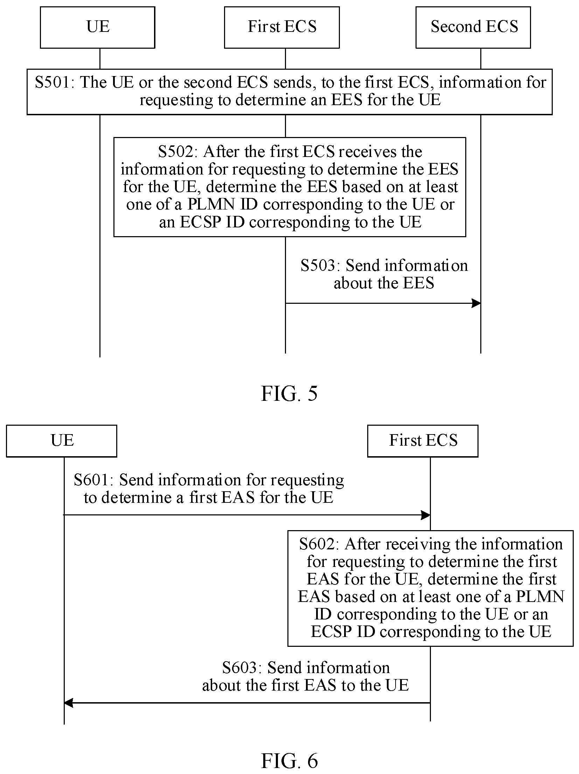

FIG. 5 is a diagram of a device selection method 500 according to an embodiment of this application. The method 500 may be combined with another embodiment in this application. For example, the method 500 may be combined with the method 400, a method 600, and a method 1200. As shown in FIG. 5, the method 500 may include the following steps.

S501: UE or a second ECS sends, to a first ECS, information for requesting to determine an EES for the UE. Correspondingly, the first ECS receives, from the UE or the second ECS, the information for requesting to determine the EES for the UE.

For example, the information for requesting to determine the EES for the UE may include at least one of a PLMN ID corresponding to the UE or an ECSP ID corresponding to the UE.

In an implementation, the UE or the second ECS may send a service provisioning request message to the first ECS, where the service provisioning request message may include the information for requesting to determine the EES for the UE.

S502: After the first ECS receives the information for requesting to determine the EES for the UE, the first ECS determines the EES based on at least one of the PLMN ID corresponding to the UE or the ECSP ID corresponding to the UE.

Specifically, the first ECS may determine the EES based on at least one of the PLMN ID corresponding to the UE and the ECSP ID corresponding to the UE in any one of the following manners:
In a possible implementation, the first ECS may determine the EES based on the PLMN ID corresponding to the UE and a PLMN ID corresponding to the EES.

Specifically, the first ECS may match the PLMN ID corresponding to the EES with the PLMN ID corresponding to the UE. If the PLMN ID corresponding to the EES includes the PLMN ID corresponding to the UE, it is considered that the matching succeeds, and it may be determined that the successfully matched EES is an EES determined for the UE.

For example, if PLMN IDs corresponding to the EES are {12 and 31}, and the PLMN ID corresponding to the UE is {12}, it may be considered that the EES is an EES determined for the UE.

Further, the first ECS may determine the EES based on the PLMN ID corresponding to the UE, the PLMN ID corresponding to the EES, and a capability of an EAS associated with the EES.

The capability of the EAS associated with the EES may include at least one of a PLMN ID corresponding to the EAS associated with the EES or an ECSP ID corresponding to the EAS associated with the EES.

Specifically, the first ECS may match the PLMN ID corresponding to the EES and the PLMN ID corresponding to the EAS associated with the EES with the PLMN ID corresponding to the UE. If the PLMN ID corresponding to the EES and the PLMN ID corresponding to the EAS associated with the EES include the PLMN ID corresponding to the UE, it is considered that the matching succeeds, and it may be determined that the EES is an EES determined for the UE.

For example, if PLMN IDs corresponding to the EES are {12, 31, and 49}, PLMN IDs corresponding to the EAS associated with the EES are {31 and 41}, and the PLMN ID corresponding to the UE is {31}, it may be considered that the EES is an EES determined for the UE.

It should be understood that, in the foregoing matching process, if an EAS associated with an EES that can be successfully matched with the UE already exists, matching between the PLMN ID corresponding to the EAS associated with the EES and the PLMN ID corresponding to the UE may be stopped.

In another possible implementation, the first ECS may determine the EES based on the ECSP ID corresponding to the UE and an ECSP ID corresponding to the EES.

Specifically, the first ECS may match the ECSP ID corresponding to the EES with the ECSP ID corresponding to the UE. If the ECSP ID corresponding to the EES includes the ECSP ID corresponding to the UE, it is considered that the matching succeeds, and it may be determined that the successfully matched EES is an EES determined for the UE.

For example, if ECSP IDs corresponding to the EES are {14 and 32}, and the ECSP ID corresponding to the UE is {32}, it may be considered that the EES is an EES determined for the UE.

Further, the first ECS may determine the EES based on the ECSP ID corresponding to the UE, the ECSP ID corresponding to the EES, and a capability of an EAS associated with the EES.

Specifically, the first ECS may match the ECSP ID corresponding to the EES and the ECSP ID corresponding to the EAS associated with the EES with the ECSP ID corresponding to the UE. If the ECSP ID corresponding to the EES and the ECSP ID corresponding to the EAS associated with the EES include the ECSP ID corresponding to the UE, it is considered that the matching succeeds, and it may be determined that the EES is an EES determined for the UE.

For example, if ECSP IDs corresponding to the EES are {12, 30, and 42}, ECSP IDs corresponding to the EAS associated with the EES are {12 and 41}, and the ECSP ID corresponding to the UE is {12}, it may be considered that the EES is an EES determined for the UE.

It should be understood that, in the foregoing matching process, if an EAS associated with an EES that can be successfully matched with the UE already exists, matching between the PLMN ID corresponding to the EAS associated with the EES and the PLMN ID corresponding to the UE may be stopped.

S503: The first ECS sends information about the EES to the second ECS. Correspondingly, the second ECS receives the information about the EES from the first ECS.

The information about the EES may include identification information of the EES, endpoint information (for example, an endpoint address like a uniform resource identifier of the EES, an internet protocol of the EES, or a fully qualified domain name of the EES) of the EES, a service range of the EES, a data network access identifier of the EES, and the like.

Optionally, the information about the EES may further include at least one of identification information of the EAS associated with the EES, endpoint information (for example, an endpoint address like a uniform resource identifier, an internet protocol, or a fully qualified domain name) of the EAS associated with the EES, and the PLMN ID of the EAS associated with the EES or the ECSP ID of the EAS associated with the EES.

Further, the EES may include one or more EESs.

In an implementation, the first ECS may send a service provisioning response message to the second ECS, where the service provisioning response message may include the information about the EES.

It should be understood that if the first ECS determines that no EES supports a service of the UE, the first ECS may return failure indication information and a failure cause to the UE, to indicate that no EES can support the service of the UE.

Further, the second ECS may send the information about the EES to the UE.

In addition, alternatively, the first ECS may directly send the information about the EES to the UE based on the EES.

Optionally, the method 500 further includes: The first ECS receives, from the UE, information for requesting to determine a first EAS for the UE. Correspondingly, the UE sends, to the first ECS, the information for requesting to determine the first EAS for the UE. The first EAS is an EAS associated with the EES.

For example, the information for requesting to determine the first EAS for the UE includes at least one of the PLMN ID corresponding to the UE or the ECSP ID corresponding to the UE.

In an implementation, the UE may send a service discovery request message to the first ECS, where the service discovery request message may include the information for requesting to determine the first EAS for the UE.

Optionally, after the first ECS receives the information for determining the first EAS for the UE, the method 500 further includes: The first ECS determines the first EAS based on at least one of the PLMN ID corresponding to the UE or the ECSP ID corresponding to the UE.

Specifically, that the first ECS determines the first EAS based on at least one of the PLMN ID corresponding to the UE or the ECSP ID corresponding to the UE may include at least one of the following manners:

In a possible implementation, the first ECS determines the first EAS based on the PLMN ID corresponding to the UE and the PLMN ID corresponding to the EAS associated with the EES.

In another possible implementation, the first ECS determines the first EAS based on the ECSP ID corresponding to the UE and the ECSP ID corresponding to the EAS associated with the EES.

Specifically, for descriptions of determining the first EAS by the first ECS, refer to the related descriptions of determining the first EAS by the EES in S402. For brevity, details are not described herein in this application.

Optionally, after the first EAS is determined, the method 500 further includes: The first ECS sends information about the first EAS to the UE. Correspondingly, the UE receives the information about the first EAS from the first ECS.

Specifically, for descriptions of the information about the first EAS, refer to the descriptions of the information about the first EAS in S403. For brevity, details are not described herein in this application.

In an implementation, the first ECS may send a service discovery response message to the UE, where the service discovery response message may include the information about the first EAS.

Optionally, the method 500 further includes: The first ECS receives at least one of a PLMN ID corresponding to the first EAS, an ECSP ID corresponding to the first EAS, the PLMN ID corresponding to the EES, or the ECSP ID corresponding to the EES from the EES. Correspondingly, the EES may send the foregoing information to the first ECS.

In an implementation, the EES may send a service registration request message to the first ECS, where the service registration request message includes the foregoing at least one piece of information.

In addition, the foregoing at least one piece of information may alternatively be carried in any other message between the EES and the first ECS. This is not limited herein in this application.

Further, the first ECS may send a registration (update) response message to the EES.

According to the foregoing solution, the EES selected by the first ECS for the UE supports the service of the UE. This avoids a problem that the service is affected when a further selected EAS cannot meet the service of the UE because an EES obtained by the first ECS cannot meet the service of the UE, and improves user experience.

In addition, the first EAS selected by the first ECS for the UE supports the service of the UE. This avoids a problem that the service is affected because an EAS obtained by the first ECS cannot meet the service of the UE, and improves user experience.

In addition, if the first ECS determines that no EES supports the service of the UE, the first ECS may return the failure indication information to the UE. Therefore, the UE is prevented from still initiating the service when no EES supports the service of the UE.

FIG. 6 is a diagram of a device selection method 600 according to an embodiment of this application. The method 600 may be combined with another embodiment in this application. For example, the method 600 may be combined with the method 400, the method 500, and a method 1200. As shown in FIG. 6, the method 600 may include the following steps.

S601: UE sends, to a first ECS, information for requesting to determine a first EAS for the UE. Correspondingly, the first ECS receives, from the UE, the information for requesting to determine the first EAS for the UE.

Specifically, for descriptions of the information for requesting to determine the first EAS for the UE, refer to the related descriptions of the information for requesting to determine the first EAS for the UE in S401. For brevity, details are not described herein in this application.

S602: After the first ECS receives the information for requesting to determine the first EAS for the UE, the first ECS determines the first EAS based on at least one of a PLMN ID corresponding to the UE or an ECSP ID corresponding to the UE.

Specifically, for descriptions of determining the first EAS by the first ECS, refer to the descriptions of determining the first EAS by the EES in S402. For brevity, details are not described herein in this application.

S603: The first ECS sends information about the first EAS to the UE. Correspondingly, the UE receives the information about the first EAS from the first ECS.

Specifically, for descriptions of the information about the first EAS, refer to the related descriptions of the information about the first EAS in S403. For brevity, details are not described herein in this application.

In addition, if the first ECS determines that no EAS has a capability of serving the UE, the first ECS sends failure information to the UE, where the failure information indicates that no EAS has the capability of serving the UE. Optionally, the failure information may carry a failure cause indication, to indicate that no EAS can provide a service for the UE.

Optionally, to determine the EES of the UE, the method 600 further includes: The UE or a second ECS sends, to the first ECS, information for requesting to determine the EES for the UE. Correspondingly, the first ECS receives, from the UE or the second ECS, the information for requesting to determine the EES for the UE.

In an implementation, the UE or the second ECS may send a service provisioning request message to the first ECS, where the service provisioning request message may include the information for requesting to determine the EES for the UE.

Optionally, after the first ECS receives, from the UE or the second ECS, the information for requesting to determine the EES for the UE, the method 600 further includes: The first ECS determines the EES based on at least one of the PLMN ID corresponding to the UE or the ECSP ID corresponding to the UE.

Specifically, for descriptions of determining the EES by the first ECS, refer to the descriptions of determining the EES by the first ECS in S502. For brevity, details are not described herein in this application.

Optionally, after the EES is determined, the method 600 further includes: The first ECS sends information about the EES to the second ECS. Correspondingly, the second ECS receives the information about the EES from the first ECS.

Specifically, for descriptions of the information about the EES, refer to the related descriptions of the information about the EES in S503. For brevity, details are not described herein in this application.

Optionally, to implement S603, the method 600 further includes: The first ECS receives at least one of a PLMN ID corresponding to the EES or an ECSP ID corresponding to the EES from the EES. Correspondingly, the EES sends at least one of the PLMN ID corresponding to the EES or the ECSP ID corresponding to the EES to the first ECS.

Further, the first ECS may receive at least one of a PLMN ID corresponding to the first EAS or an ECSP ID corresponding to the first EAS from the EES.

It should be understood that if the first ECS determines that no EES supports a service of the UE, the first ECS may return failure indication information and a failure cause to the UE, to indicate that no EES can support the service of the UE.

According to the foregoing solution, the first EAS selected by the first ECS for the UE supports the service of the UE. This avoids a problem that the service is affected when a further selected EAS cannot meet the service of the UE because an EAS cannot meet the service of the UE, and improves user experience.

In addition, the EES selected by the first ECS for the UE supports the service of the UE. This avoids a problem that the service is affected because an EES cannot meet the service of the UE, and improves user experience.

In addition, if the first ECS determines that no EES supports the service of the UE, the first ECS may return the failure indication information to the UE. Therefore, the UE is prevented from still initiating the service when no EES supports the service of the UE.

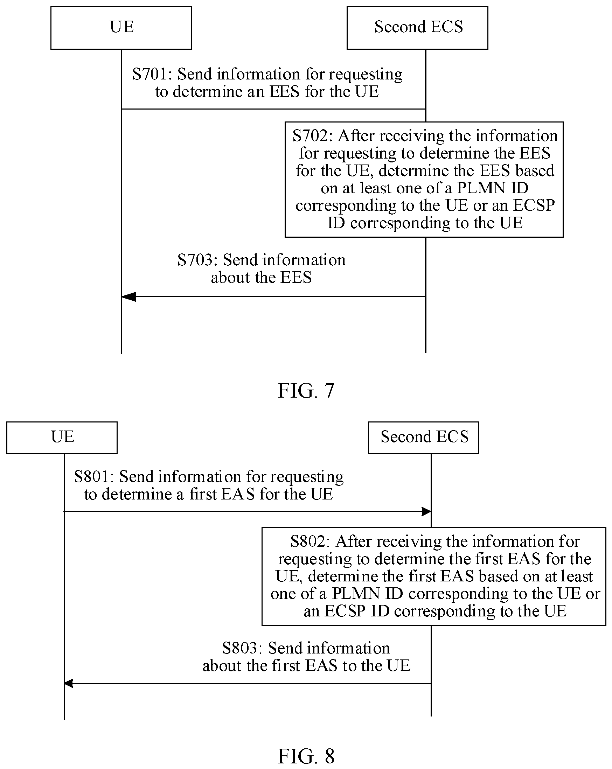

FIG. 7 is a diagram of a device selection method 700 according to an embodiment of this application. The method 700 may be combined with another embodiment in this application. For example, the method 700 may be combined with the method 400, a method 800, and a method 1200. As shown in FIG. 7, the method 700 may include the following steps.

S701: UE sends, to a second ECS, information for requesting to determine an EES for the UE. Correspondingly, the second ECS receives, from the UE, the information for requesting to determine the EES for the UE.

For example, the information for requesting to determine the EES for the UE may include at least one of a PLMN ID corresponding to the UE or an ECSP ID corresponding to the UE.

In an implementation, the UE may send a service provisioning request message to the second ECS, where the service provisioning request message may include the information for requesting to determine the EES for the UE.

S702: After the second ECS receives the information for requesting to determine the EES for the UE, the second ECS determines the EES based on at least one of the PLMN ID corresponding to the UE or the ECSP ID corresponding to the UE.

Specifically, for descriptions of determining the EES by the second ECS, refer to the descriptions of determining the EES by the first ECS in S502. For brevity, details are not described herein in this application.

S703: The second ECS sends information about the EES to the UE. Correspondingly, the UE receives the information about the EES from the second ECS.

For the information about the EES, refer to the information about the EES in S503. For brevity, details are not described herein in this application.

It should be understood that if the second ECS determines that no EES supports a service of the UE, the second ECS may return failure indication information and a failure cause to the UE, to indicate that no EES can support the service of the UE.

Optionally, to determine a first EAS of the UE, the method 700 further includes: The UE sends, to the second ECS, information for requesting to determine the first EAS for the UE. Correspondingly, the second ECS receives, from the UE, the information for requesting to determine the first EAS for the UE.

In an implementation, the UE may send a service discovery request message to the second ECS, where the service discovery request message may include the information for requesting to determine the first EAS for the UE.

Optionally, after the second ECS receives the information for requesting to determine the first EAS for the UE, the method 700 further includes: The second ECS determines the first EAS based on at least one of the PLMN ID corresponding to the UE or the ECSP ID corresponding to the UE.

Specifically, for descriptions of determining the first EAS by the second ECS, refer to the descriptions of determining the first EAS by the EES in S402. For brevity, details are not described herein in this application.

Optionally, after the first EAS is determined, the method 700 further includes: The second ECS sends information about the first EAS to the UE based on the first EAS. Correspondingly, the UE receives the information about the first EAS from the second ECS.

Specifically, for descriptions of the information about the first EAS, refer to the descriptions of the information about the first EAS in S403. For brevity, details are not described herein in this application.

Optionally, to implement step S703, the method 700 further includes: The second ECS receives, from the first ECS, at least one of a PLMN ID corresponding to an EAS associated with the EES or an ECSP ID corresponding to the EAS associated with the EES.

Further, the second ECS may receive at least one of a PLMN ID corresponding to the first EAS or an ECSP ID corresponding to the first EAS from the first ECS.

In addition, if the second ECS determines that no EAS has a capability of serving the UE, the second ECS sends failure information to the UE, where the failure information indicates that no EAS has the capability of serving the UE. Optionally, the failure information may carry a failure cause indication, to indicate that no EAS can provide a service for the UE.

According to the foregoing solution, the EES selected by the second ECS for the UE supports the service of the UE. This avoids a problem that the service is affected when a further selected EAS cannot meet the service of the UE because an EES cannot meet the service of the UE, and improves user experience.

In addition, the first EAS selected by the second ECS for the UE supports the service of the UE. This avoids a problem that the service is affected because an EAS cannot meet the service of the UE, and improves user experience.

In addition, if the second ECS determines that no EES supports the service of the UE, the second ECS may return the failure indication information to the UE. Therefore, the UE is prevented from still initiating the service when no EES supports the service of the UE.

FIG. 8 is a diagram of a device selection method 800 according to an embodiment of this application. The method 800 may be combined with another embodiment in this application. For example, the method 800 may be combined with the method 400, the method 700, and a method 1200. As shown in FIG. 8, the method 800 may include the following steps.

S801: UE sends, to a second ECS, information for requesting to determine a first EAS for the UE. Correspondingly, the second ECS receives, from the UE, the information for requesting to determine the first EAS for the UE.

Specifically, the information for requesting to determine the first EAS for the UE includes at least one of PLMN ID information corresponding to the UE or ECSP ID information corresponding to the UE.

In an implementation, the UE may send a service discovery request message to the second ECS, where the service discovery request message includes the information for requesting to determine the first EAS for the UE.

Optionally, the service discovery request message may further include location information of the UE, identity information of the UE, and application client profile (AC profile) information.

S802: After the second ECS receives the information for requesting to determine the first EAS for the UE, the second ECS determines the first EAS based on at least one of the PLMN ID corresponding to the UE or the ECSP ID corresponding to the UE.

Specifically, for descriptions of determining the first EAS by the second ECS, refer to the descriptions of determining the first EAS by the EES in S402. For brevity, details are not described herein in this application.

S803: The second ECS sends information about the first EAS to the UE. Correspondingly, the UE receives the information about the first EAS from the second ECS.

Specifically, for descriptions of the information about the first EAS, refer to the related descriptions of the information about the first EAS in S403. For brevity, details are not described herein in this application.

In addition, if the second ECS determines that no EAS has a capability of serving the UE, the second ECS sends failure information to the UE, where the failure information indicates that no EAS has the capability of serving the UE. Optionally, the failure information may carry a failure cause indication, to indicate that no EAS can provide a service for the UE.

Optionally, to determine the EES of the UE, the method 800 further includes: The second ECS receives, from the UE, information for requesting to determine the EES for the UE. Correspondingly, the UE sends, to the second ECS, the information for requesting to determine the EES for the UE.

In an implementation, the UE may send a service provisioning request message to the second ECS, where the service provisioning request message may include the information for requesting to determine the EES for the UE.

Optionally, after the second ECS receives the information for requesting to determine the EES for the UE, the method 800 further includes: The second ECS determines the EES based on at least one of the PLMN ID corresponding to the UE or the ECSP ID corresponding to the UE.

Specifically, for descriptions of determining the EES by the second ECS, refer to the descriptions of determining the EES by the first ECS in S502. For brevity, details are not described herein in this application.

Optionally, after the EES is determined, the method 800 further includes: The second ECS sends information about the EES to the UE based on the EES. Correspondingly, the UE receives the information about the EES from the second ECS.

For the information about the EES, refer to the information about the EES in S503. For brevity, details are not described herein in this application.

Optionally, to implement S803, the method 800 further includes: The second ECS receives at least one of a PLMN ID corresponding to the EES or an ECSP ID corresponding to the EES from the first ECS. Correspondingly, the first ECS sends at least one of the PLMN ID corresponding to the EES or the ECSP ID corresponding to the EES to the second ECS.

The EES is an EES associated with the first ECS.

Optionally, the second ECS may further receive at least one of a PLMN ID corresponding to the first EAS or an ECSP ID corresponding to the first EAS from the first ECS.

It should be understood that if the second ECS determines that no EES supports a service of the UE, the second ECS may return failure indication information and a failure cause to the UE, to indicate that no EES can support the service of the UE.

According to the foregoing solution, the first EAS selected by the second ECS for the UE supports the service of the UE. This avoids a problem that the service is affected when a further selected EAS cannot meet the service of the UE because an EAS cannot meet the service of the UE, and improves user experience.

In addition, the EES selected by the second ECS for the UE supports the service of the UE. This avoids a problem that the service is affected because an EES cannot meet the service of the UE, and improves user experience.

In addition, if the second ECS determines that no EES supports the service of the UE, the second ECS may return the failure indication information to the UE. Therefore, the UE is prevented from still initiating the service when no EES supports the service of the UE.

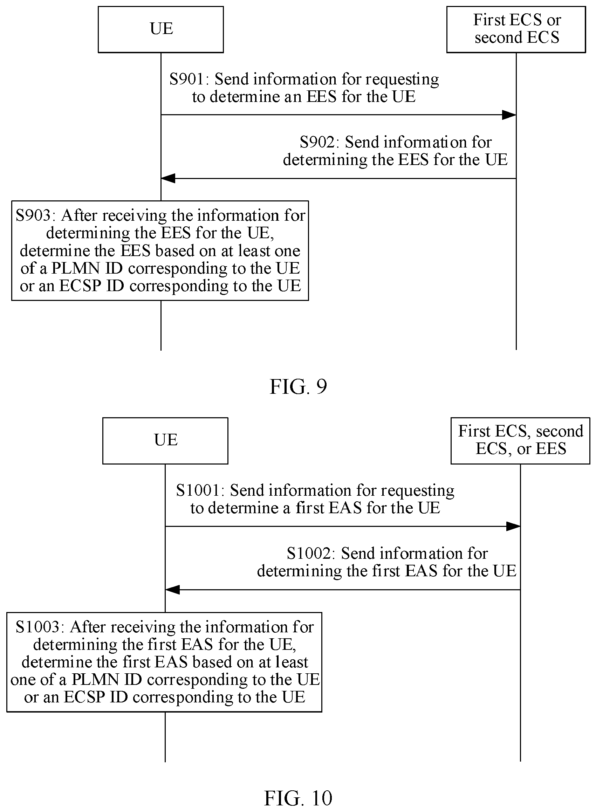

FIG. 9 is a diagram of a device selection method 900 according to an embodiment of this application. The method 900 may be combined with another embodiment in this application. For example, the method 900 may be combined with the method 400, a method 1000, and a method 1200. As shown in FIG. 9, the method 900 may include the following steps.

S901: UE sends, to a first ECS or a second ECS, information for requesting to determine an EES for the UE. Correspondingly, the first ECS or the second ECS receives, from the UE, the information for requesting to determine the EES for the UE.

The information for requesting to determine the EES for the UE may include at least one of a PLMN ID corresponding to the UE or an ECSP ID corresponding to the UE.

S902: The first ECS or the second ECS sends, to the UE, information for determining the EES for the UE. Correspondingly, the UE receives, from the first ECS or the second ECS, the information for determining the EES for the UE.

Specifically, after receiving the information for requesting to determine the EES for the UE, the first ECS or the second ECS may send, to the UE, the information for determining the EES for the UE.

For example, the information for determining the EES for the UE includes at least one of a PLMN ID corresponding to the EES or an ECSP ID corresponding to the EES.

S903: After the UE receives the information for requesting to determine the EES for the UE, the UE determines the EES based on at least one of the PLMN ID corresponding to the UE or the ECSP ID corresponding to the UE.

Specifically, for descriptions of determining the EES by the UE, refer to the descriptions of determining the EES by the first ECS in S502. For brevity, details are not described herein in this application.

Optionally, to determine a first EAS of the UE, the method 900 further includes: The UE sends, to the first ECS, the second ECS, or the EES, information for requesting to determine the first EAS for the UE. Correspondingly, the first ECS, the second ECS, or the EES receives, from the UE, the information for requesting to determine the first EAS for the UE.

Optionally, after the first ECS or the second ECS receives the information for requesting to determine the first EAS for the UE, the method 900 further includes: The first ECS, the second ECS, or the EES sends, to the UE, information for determining the first EAS for the UE. Correspondingly, the UE receives, from the first ECS, the second ECS, or the EES, the information for determining the first EAS for the UE.

The information for determining the first EAS for the UE includes at least one of a PLMN ID corresponding to an EAS associated with the EES or an ECSP ID corresponding to the EAS associated with the EES.

Further, the information for determining the first EAS for the UE further includes at least one of a PLMN ID corresponding to the first EAS or an ECSP ID corresponding to the first EAS.

Optionally, after the UE receives the information for determining the first EAS for the UE, the method 900 further includes: The UE determines the first EAS based on at least one of the PLMN ID corresponding to the UE or the ECSP ID corresponding to the UE.

Specifically, for descriptions of determining the first EAS by the UE, refer to the descriptions of determining the first EAS by the EES in S402. For brevity, details are not described herein in this application.

According to the foregoing solution, the EES selected by the UE supports a service of the UE. This avoids a problem that the service is affected because an EES cannot meet the service of the UE, and improves user experience.

In addition, the first EAS selected by the UE supports the service of the UE. This avoids a problem that the service is affected when a further selected EAS cannot meet the service of the UE because an EAS cannot meet the service of the UE, and improves user experience.

FIG. 10 is a diagram of a device selection method 1000 according to an embodiment of this application. The method 1000 may be combined with another embodiment in this application. For example, the method 1000 may be combined with the method 400, the method 900, and a method 1200. As shown in FIG. 10, the method 1000 may include the following steps.

S1001: UE sends, to a first ECS, a second ECS, or an EES, information for requesting to determine a first EAS for the UE. Correspondingly, the first ECS, the second ECS, or the EES receives, from the UE, the information for requesting to determine the first EAS for the UE.

The information for requesting to determine the first EAS for the UE includes at least one of a PLMN ID corresponding to the UE or an ECSP ID corresponding to the UE.

In an implementation, the UE may send a service discovery request message to the first ECS, the second ECS, or the EES, where the service discovery request message includes the information for requesting to determine the first EAS for the UE.

Optionally, the service discovery request message may further include location information of the UE, identity information of the UE, and application client profile (AC profile) information.

S1002: The first ECS or the second ECS sends, to the UE, a message for determining the first EAS for the UE. Correspondingly, the UE receives, from the first ECS or the second ECS, the message for determining the first EAS for the UE.

The information for determining the first EAS for the UE includes at least one of a PLMN ID corresponding to an EAS associated with the EES or an ECSP ID corresponding to the EAS associated with the EES.

The information for determining the first EAS for the UE further includes least one of a PLMN ID corresponding to the first EAS or an ECSP ID corresponding to the first EAS.

S1003: After the UE receives the message for determining the first EAS for the UE, the UE determines the first EAS based on at least one of the PLMN ID corresponding to the UE or the ECSP ID corresponding to the UE.

Specifically, for descriptions of determining the first EAS by the UE, refer to the descriptions of determining the first EAS by the EES in S402. For brevity, details are not described herein in this application.

Optionally, to determine the EES of the UE, when the UE sends, to the first ECS or the second ECS, the information for requesting to determine the first EAS for the UE, the method 1000 further includes: The UE sends, to the first ECS or the second ECS, information for requesting to determine the EES for the UE. Correspondingly, the first ECS or the second ECS receives, from the UE, the information for requesting to determine the EES for the UE.

Optionally, after the first ECS or the second ECS receives, from the UE, the information for requesting to determine the EES for the UE, the method 1000 further includes: The first ECS or the second ECS sends, to the UE, information for determining the EES for the UE. Correspondingly, the UE receives, from the first ECS or the second ECS, the information for determining the EES for the UE.

For example, the information for determining the EES for the UE includes at least one of a PLMN ID corresponding to the EES or an ECSP ID corresponding to the EES.

Optionally, after the UE receives the information for determining the EES for the UE, the method 1000 further includes: The UE determines the EES based on at least one of the PLMN ID corresponding to the UE or the ECSP ID corresponding to the UE.

Specifically, for descriptions of determining the EES by the UE, refer to the descriptions of determining the EES by the first ECS in S502. For brevity, details are not described herein in this application.

According to the foregoing solution, the first EAS selected by the UE supports a service of the UE. This avoids a problem that the service is affected because an EAS cannot meet the service of the UE, and improves user experience.

In addition, the EES selected by the UE supports the service of the UE. This avoids a problem that the service is affected when a further selected EAS cannot meet the service of the UE because an EAS cannot meet the service of the UE, and improves user experience.

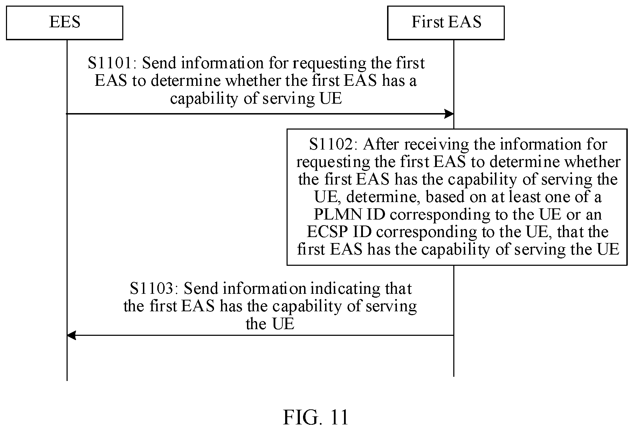

FIG. 11 is a diagram of a device selection method 1100 according to an embodiment of this application. The method 1100 may be combined with another embodiment in this application. For example, the method 1100 may be combined with the method 400 and a method 1200. As shown in FIG. 11, the method 1100 may include the following steps.

S1101: An EES sends, to a first EAS, information for requesting the first EAS to determine whether the first EAS has a capability of serving UE. Correspondingly, the first EAS receives, from the EES, the information for requesting the first EAS to determine whether the first EAS has the capability of serving the UE.

Specifically, the EES may send a request message to an EAS that meets an EAS discovery filter condition (a requirement of an AC and/or a requirement on an EAS), to determine whether the EAS has the capability of serving the UE. The first EAS is an EAS that meets the EAS discovery filter condition.

S1102: After the first EAS receives the information for requesting the first EAS to determine whether the first EAS has the capability of serving the UE, the first EAS determines, based on at least one of a PLMN ID corresponding to the UE or an ECSP ID corresponding to the UE, that the first EAS has the capability of serving the UE.

Specifically, that the first EAS determines, based on at least one of a PLMN ID corresponding to the UE or an ECSP ID corresponding to the UE, that the first EAS has the capability of serving the UE may include at least one of the following manners:
In a possible implementation, the first EAS determines, based on the PLMN ID corresponding to the UE and a PLMN ID corresponding to the first EAS, that the first EAS has the capability of serving the UE.

In another possible implementation, the first EAS determines, based on the ECSP ID corresponding to the UE and an ECSP ID corresponding to the first EAS, that the first EAS has the capability of serving the UE.

At least one of the PLMN ID corresponding to the UE or the ECSP ID corresponding to the UE may be included in subscription information of the UE. The UE may subscribe to an operator or an ECSP, and the operator or the ECSP may provide a roaming network or an edge computing service of a partner ECSP for the UE.

S1103: The first EAS sends, to the EES, information indicating that the first EAS has the capability of serving the UE. Correspondingly, the EES receives, from the first EAS, the information indicating that the first EAS has the capability of serving the UE.

Specifically, if the first EAS has the capability of serving the UE, the first EAS may send success information or acknowledgment information to the EES, where the success information or the acknowledgment information indicates that the first EAS has the capability of serving the UE. If the first EAS has no capability of serving the UE, the first EAS sends failure information to the EES, where the failure information indicates that the first EAS has no capability of serving the UE. Optionally, the failure information may carry a failure cause indication, to indicate that the first EAS cannot provide a service for the UE.

Optionally, to obtain at least one of the PLMN ID corresponding to the UE or the ECSP ID corresponding to the UE, the method 1100 further includes: The EES or a core network element sends at least one of the PLMN ID corresponding to the UE or the ECSP ID corresponding to the UE to the first EAS. Correspondingly, the first EAS receives at least one of the PLMN ID corresponding to the UE or the ECSP ID corresponding to the UE from the EES or the core network element.

For example, the first EAS may subscribe to a PLMN change (change) event from a 5G core network (5GC). To be specific, the EES may subscribe to information about the PLMN change event from a session management function (Session management function, SMF) network element, or the first EAS may subscribe to the PLMN change event from the SMF via a network element function (Network element function, NEF) network element. Then, when the SMF detects a PLMN change event of the UE, the SMF may send a PLMN change event notification message to the first EAS, where the PLMN change event notification message may carry at least one of a UE home PLMN or a UE serving PLMN.

Further, the first EAS may obtain ECSP information of the UE from a unified data management (Unified data management, UDM) network element via the SMF.

According to the foregoing solution, it may be determined that the first EAS supports a service of the UE. This avoids a problem that the service is affected because an EAS cannot meet the service of the UE, and improves user experience.

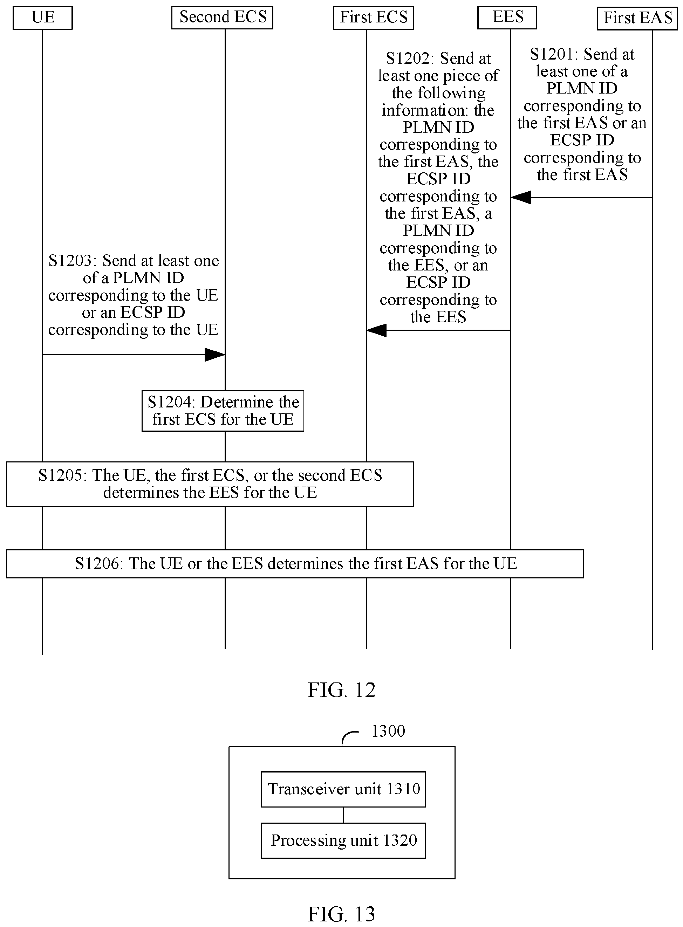

FIG. 12 is a diagram of a device selection method 1200 according to an embodiment of this application. The method 1200 may be combined with another embodiment in this application. For example, the method 1200 may be combined with the method 400 to the method 1100. As shown in FIG. 12, the method 1200 may include the following steps.

S1201: A first EAS sends at least one of a PLMN ID corresponding to the first EAS or an ECSP ID corresponding to the first EAS to an EES. Correspondingly, the EES receives at least one of the PLMN ID corresponding to the first EAS or the ECSP ID corresponding to the first EAS from the first EAS.

The information may identify whether the first EAS can provide a service for a roaming UE, or whether the first EAS can provide a service for a user of a partner ECSP.

In a possible implementation, the first EAS may send an EAS registration request (EAS registration (update) request) message to the EES, where the EAS registration request message carries at least one of the PLMN ID corresponding to the first EAS or the ECSP ID corresponding to the first EAS. Further, the foregoing information may be stored in an EAS profile (EAS profile).

In addition, at least one of the PLMN ID corresponding to the first EAS or the ECSP ID corresponding to the first EAS may alternatively be carried in any one of the following messages, and a specific carrying message is not limited:
a UE location (update) request (UE location (update) request), a UE location subscribe (update) request (UE location subscribe (update) request), an ACR management event (update) subscribe request (ACR management event (update) subscribe request), an application client information subscription (update) request (AC information subscription (update) request), a UE identifier API (update) request (UE identifier API (update) request), and a session with quality of service create (update) request (Session with QoS create (update) request).

Optionally, after receiving the registration request message, the EES may store information included in the registration request message, and send a registration (update) response message to the first EAS.

S1202: The EES sends at least one piece of the following information to a first ECS: the PLMN ID corresponding to the first EAS, the ECSP ID corresponding to the first EAS, a PLMN ID corresponding to the EES, or an ECSP ID corresponding to the EES. Correspondingly, the first ECS receives the foregoing at least one piece of information from the EES.

The foregoing at least one piece of information may identify whether the first EAS can provide a service for the roaming UE, whether the first EAS can provide a service for the user of the partner ECSP, whether the EES can provide a service for the roaming UE, whether the EES can provide a service for the user of the partner ECSP, or whether an EAS associated with the EES can provide a service for the roaming UE or provide a service for the user of the partner ECSP.

In an implementation, the EES may send a service registration request message to the first ECS, where the service registration request message includes the foregoing at least one piece of information.

In addition, the foregoing at least one piece of information may alternatively be carried in any other message between the EES and the first ECS. This is not limited herein in this application.

Further, when the foregoing information may include at least one of the PLMN ID information corresponding to the EES or the ECSP ID corresponding to the EES, the method 400 further includes at least one of the following:
In a possible implementation, the EES may determine, based on the PLMN ID corresponding to the first EAS, the PLMN ID corresponding to the EES.

In another possible implementation, the EES may determine, based on the ECSP ID corresponding to the first EAS, the ECSP ID corresponding to the EES.

In addition, after the EES sends the service registration request message to the first ECS, the EES may receive a registration (update) response message from the first ECS.

Optionally, the first ECS may send at least one of a PLMN supported by the first ECS or an ECSP supported by the first ECS to a second ECS. Further, the first ECS may send at least one of the PLMN ID corresponding to the EES, the ECSP ID corresponding to the EES, the PLMN ID corresponding to the first EAS, or the ECSP ID corresponding to the first EAS to the second ECS.

S1203: The UE sends at least one of a PLMN ID corresponding to the UE or an ECSP ID corresponding to the UE to the second ECS. Correspondingly, the second ECS receives at least one of the PLMN ID corresponding to the UE or the ECSP ID corresponding to the UE from the UE.

For example, when the UE needs an edge computing service, the UE may send at least one of the PLMN ID corresponding to the UE or the ECSP ID corresponding to the UE to the second ECS (for example, the second ECS may be a home operator of the UE, an ECS of an ECSP, an ECS preconfigured by the UE, or an ECS delivered by a core network element).

In an implementation, at least one of the PLMN ID corresponding to the UE or the ECSP ID corresponding to the UE may be carried in a service provisioning request (Service provisioning request) message, where the service provisioning request message may be for requesting the second ECS to determine an ECS (for example, the first ECS) for the UE.

Optionally, the service provisioning request message may further carry at least one of a UE identifier, an application client profile (AC profile), or a UE location (UE location). Further, the service provisioning request message may further carry indication information indicating whether only an EAS provided by a home operator/ECSP can be used, indication information indicating whether the EAS provided by the home operator/home ECSP is preferentially selected, an ECS of a preferentially selected PLMN ID, an ECS of a preferentially selected ECSP ID, a list of the preferentially selected PLMN ID, a list of the preferentially selected ECSP ID, an ECS of a specified PLMN ID, or an ECS of a specified ECSP ID.

S1204: The second ECS determines the first ECS for the UE.

Specifically, after the second ECS receives the service provisioning request message, the second ECS may determine the first ECS for the UE based on at least one of the PLMN ID corresponding to the UE or the ECSP ID corresponding to the UE, and identification information of the UE. Further, the second ECS may select and determine, based on information about a service requested by the UE, or based on at least one of an ID of a PLMN supported by the second ECS or an ID of an ECSP supported by the second ECS, that the second ECS (a visited operator network or a partner ECSP network) needs to be relocated to.

In a possible implementation, after the second ECS determines the first ECS for the UE, the second ECS may send information about the first ECS to the UE. For example, the information about the first ECS may include configuration information of the first ECS or address information of the first ECS.

For example, the second ECS may send a service provisioning response message to the UE, where the service provisioning response message may include the information about the first ECS.

Then, the UE may send at least one of the PLMN ID corresponding to the UE or the ECSP ID corresponding to the UE, the identification information of the UE, and the application client profile (AC profile) information to the first ECS.

For example, the UE may send a service provisioning request message to the first ECS, where the service provisioning request message may carry the foregoing information, to indicate the first ECS to select, for the UE, an EES (for example, the EES in this embodiment) that supports the foregoing PLMN or ECSP.

In another possible implementation, after the second ECS determines the first ECS for the UE, the second ECS may send at least one of the PLMN ID corresponding to the UE or the ECSP ID corresponding to the UE, the identification information of the UE, and the application client profile (AC profile) information to the first ECS.

For example, the second ECS may send a service provisioning request message to the first ECS, where the service provisioning request message may carry the foregoing information, to indicate the first ECS to select, for the UE, an EES (for example, the EES in this embodiment) that supports the foregoing PLMN or ECSP.

S1205: The UE, the first ECS, or the second ECS determines the EES for the UE.

Optionally, the UE, the first ECS, or the second ECS may determine the EES for the UE.

Specifically, for descriptions of determining the EES by the UE, refer to the descriptions of determining the EES by the UE in the method 900. For descriptions of determining the EES by the first ECS, refer to the descriptions of determining the EES by the first ECS in the method 500. For descriptions of determining the EES by the second ECS, refer to the descriptions of determining the EES by the second ECS in the method 700. For brevity, details are not described herein in this application.

S1206: The UE or the EES determines the first EAS for the UE.

Specifically, for descriptions of determining the first EAS by the UE, refer to the descriptions of determining the first EAS by the UE in the method 800. For descriptions of determining the first EAS by the EES, refer to the descriptions of determining the first EAS by the EES in the method 400. For brevity, details are not described herein in this application.

In another implementation, the first ECS, the second ECS, or the first EAS may also determine the first EAS for the UE.

Specifically, for descriptions of determining the first EAS by the first ECS, refer to the descriptions of determining the first EAS by the first ECS in the method 600. For descriptions of determining the first EAS by the second ECS, refer to the descriptions of determining the first EAS by the second ECS in the method 800. For descriptions of determining the first EAS by the first EAS, refer to the descriptions of determining the first EAS by the first EAS in the method 1100. For brevity, details are not described herein in this application.

It should be understood that, in the foregoing solution, if only the first EAS needs to be determined for the UE, S1202 and S1205 may not be performed; or if only the EES needs to be determined for the UE, S1206 may not be performed.

According to the foregoing solution, the first EAS is determined for the UE based on at least one of the PLMN ID corresponding to the UE or the ECSP ID corresponding to the UE. Optionally, the EES may alternatively be determined for the UE based on at least one of the PLMN ID corresponding to the UE or the ECSP ID corresponding to the UE. In addition, the first EAS or the EES selected for the UE supports a service of the UE. This avoids a problem that the service is affected because an EES or an EAS cannot meet the service of the UE, and improves user experience.

In addition, if it is determined that no EES supports the service of the UE, failure indication information may be returned to the UE. Therefore, the UE is prevented from still initiating the service when no EES supports the service of the UE.

It may be understood that, in the foregoing method embodiments, methods and operations implemented by the terminal device may alternatively be implemented by a component (for example, a chip or a circuit) that can be used in the terminal device, and methods and operations implemented by the network device may alternatively be implemented by a component (for example, a chip or a circuit) that can be used in the network device.

The methods provided in embodiments of this application are described above in detail with reference to FIG. 4 to FIG. 12. Communication apparatuses provided in embodiments of this application are described below in detail with reference to FIG. 13 to FIG. 16. It should be understood that descriptions of apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between network elements. It may be understood that, to implement the foregoing functions, each network element, for example, a transmit end device or a receive end device, includes a corresponding hardware structure and/or software module for performing each function. A person skilled in the art may be aware that, in combination with examples of units and algorithm steps described in embodiments disclosed in this specification, this application can be implemented by hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

In embodiments of this application, division into functional modules may be performed on the transmit end device or the receive end device based on the foregoing method examples. For example, division into the functional modules may be performed based on corresponding functions, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used. An example in which the division into the functional modules is performed based on the corresponding functions is used below for description.

FIG. 13 is a block schematic of a communication apparatus 1300 according to an embodiment of this application. The communication apparatus 1300 includes a transceiver unit 1310 and a processing unit 1320. The transceiver unit 1310 may implement a corresponding communication function, and the processing unit 1310 is configured to perform data processing. The transceiver unit 1310 may also be referred to as a communication interface or a communication unit.

Optionally, the communication apparatus 1300 may further include a storage unit. The storage unit may be configured to store instructions and/or data. The processing unit 1320 may read the instructions and/or the data in the storage unit, to enable the communication apparatus to implement the foregoing method embodiments.

The communication apparatus 1300 may be configured to perform actions performed by the terminal device in the foregoing method embodiments. In this case, the communication apparatus 1300 may be a terminal device or a component that can be configured in the terminal device. The transceiver unit 1310 is configured to perform a transceiver-related operation on a terminal device side in the foregoing method embodiments. The processing unit 1320 is configured to perform a processing-related operation on the terminal device side in the foregoing method embodiments.

Alternatively, the communication apparatus 1300 may be configured to perform actions performed by the first EAS in the foregoing method embodiments. In this case, the communication apparatus 1300 may be a first EAS or a component that can be configured in the first EAS. The transceiver unit 1310 is configured to perform a transceiver-related operation on a first EAS side in the foregoing method embodiments. The processing unit 1320 is configured to perform a processing-related operation on the first EAS side in the foregoing method embodiments.

Alternatively, the communication apparatus 1300 may be configured to perform actions performed by the EES in the foregoing method embodiments. In this case, the communication apparatus 1300 may be an EES or a component that can be configured in the EES. The transceiver unit 1310 is configured to perform a transceiver-related operation on an EES side in the foregoing method embodiments. The processing unit 1320 is configured to perform a processing-related operation on the EES side in the foregoing method embodiments.

Alternatively, the communication apparatus 1300 may be configured to perform actions performed by the first ECS in the foregoing method embodiments. In this case, the communication apparatus 1300 may be a first ECS or a component that can be configured in the first ECS. The transceiver unit 1310 is configured to perform a transceiver-related operation on a first ECS side in the foregoing method embodiments. The processing unit 1320 is configured to perform a processing-related operation on the first ECS side in the foregoing method embodiments.

Alternatively, the communication apparatus 1300 may be configured to perform actions performed by the second ECS in the foregoing method embodiments. In this case, the communication apparatus 1300 may be a second ECS or a component that can be configured in the second ECS. The transceiver unit 1310 is configured to perform a transceiver-related operation on a second ECS side in the foregoing method embodiments. The processing unit 1320 is configured to perform a processing-related operation on the second ECS side in the foregoing method embodiments.

In an example, the communication apparatus 1300 may implement corresponding steps or procedures performed by the terminal device in the method 400 to the method 1000, and the method 1200 according to embodiments of this application. The communication apparatus 1300 may include units configured to perform methods performed by the terminal device in the method 400 in FIG. 4 to the method 1000 in FIG. 10, and the method 1200 in FIG. 12. In addition, the units in the communication apparatus 1300 and the foregoing other operations and/or functions are respectively for implementing corresponding procedures of the method 400 in FIG. 4 to the method 1000 in FIG. 10, and the method 1200 in FIG. 12.

In another example, the communication apparatus 1300 may implement corresponding steps or procedures performed by the EES in the method 400, the method 1100, and the method 1200 according to embodiments of this application. The communication apparatus 1300 may include units configured to perform methods performed by the EES in the method 400 in FIG. 4, the method 1100 in FIG. 11, and the method 1200 in FIG. 12. In addition, the units in the communication apparatus 1300 and the foregoing other operations and/or functions are respectively for implementing corresponding procedures of the method 400 in FIG. 4, the method 1100 in FIG. 11, and the method 1200 in FIG. 12.

In another example, the communication apparatus 1300 may implement corresponding steps or procedures performed by the first ECS in the method 500, the method 600, and the method 1200 according to embodiments of this application. The communication apparatus 1300 may include units configured to perform methods performed by the first ECS in the method 500 in FIG. 5, the method 600 in FIG. 6, and the method 1200 in FIG. 12. In addition, the units in the communication apparatus 1300 and the foregoing other operations and/or functions are respectively for implementing corresponding procedures of the method 500 in FIG. 5, the method 600 in FIG. 6, and the method 1200 in FIG. 12.

In another example, the communication apparatus 1300 may implement corresponding steps or procedures performed by the second ECS in the method 500, the method 700 to the method 1000, and the method 1200 according to embodiments of this application. The communication apparatus 1300 may include units configured to perform methods performed by the second ECS in the method 500 in FIG. 5, the method 700 in FIG. 7 to the method 1000 in FIG. 10, and the method 1200 in FIG. 12. In addition, the units in the communication apparatus 1300 and the foregoing other operations and/or functions are respectively for implementing corresponding procedures of the method 500 in FIG. 5, the method 700 in FIG. 7 to the method 1000 in FIG. 10, and the method 1200 in FIG. 12.

In another example, the communication apparatus 1300 may implement corresponding steps or procedures performed by the first EAS in the method 1100 and the method 1200 according to embodiments of this application. The communication apparatus 1300 may include units configured to perform methods performed by the first EAS in the method 1100 in FIG. 11 and the method 1200 in FIG. 12. In addition, the units in the communication apparatus 1300 and the foregoing other operations and/or functions are respectively for implementing corresponding procedures of the method 1100 in FIG. 11 and the method 1200 in FIG. 12.

It should be understood that specific processes in which the units perform the foregoing corresponding steps are described in detail in the foregoing method embodiments. For brevity, details are not described herein again.

The processing unit 1320 in the foregoing embodiments may be implemented by at least one processor or a processor-related circuit. The transceiver unit 1310 may be implemented by a transceiver or a transceiver-related circuit. The transceiver unit 1310 may also be referred to as a communication unit or a communication interface. The storage unit may be implemented by at least one memory.

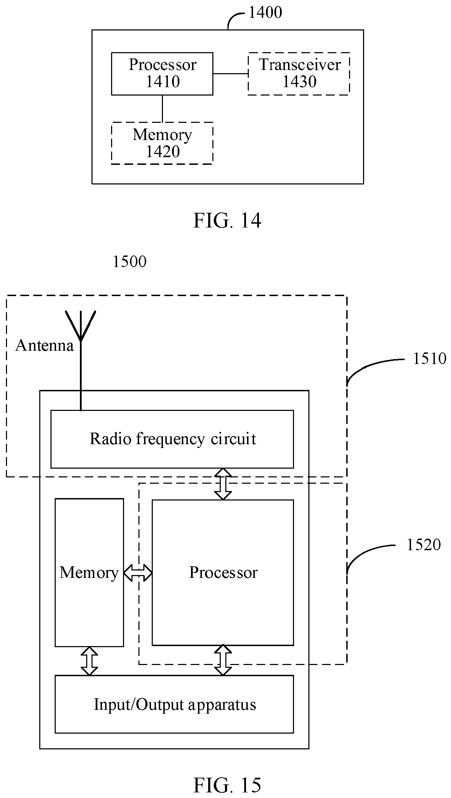

As shown in FIG. 14, an embodiment of this application further provides a communication apparatus 1400. The communication apparatus 1400 includes a processor 1410. The processor 1410 is coupled to a memory 1420. The memory 1420 is configured to store a computer program or instructions and/or data. The processor 1410 is configured to execute the computer program or the instructions and/or the data stored in the memory 1420, to enable the methods in the foregoing method embodiments to be performed.

Optionally, the communication apparatus 1400 includes one or more processors 1410.

Optionally, as shown in FIG. 14, the communication apparatus 1400 may further include the memory 1420.

Optionally, the communication apparatus 1400 may include one or more memories 1420.

Optionally, the memory 1420 and the processor 1410 may be integrated together, or separately disposed.

Optionally, as shown in FIG. 14, the communication apparatus 1400 may further include a transceiver 1430, and the transceiver 1430 is configured to receive and/or send a signal. For example, the processor 1410 is configured to control the transceiver 1430 to receive and/or send the signal.

In a solution, the communication apparatus 1400 is configured to implement operations performed by the terminal device in the foregoing method embodiments.

For example, the processor 1410 is configured to implement a processing-related operation performed by the terminal device in the foregoing method embodiments, and the transceiver 1430 is configured to implement a transceiver-related operation performed by the terminal device in the foregoing method embodiments.

In another solution, the communication apparatus 1400 is configured to implement operations performed by the EES in the foregoing method embodiments.

For example, the processor 1410 is configured to implement a processing-related operation performed by the EES in the foregoing method embodiments, and the transceiver 1430 is configured to implement a transceiver-related operation performed by the EES in the foregoing method embodiments.

In another solution, the communication apparatus 1400 is configured to implement operations performed by the first ECS in the foregoing method embodiments.

For example, the processor 1410 is configured to implement a processing-related operation performed by the first ECS in the foregoing method embodiments, and the transceiver 1430 is configured to implement a transceiver-related operation performed by the first ECS in the foregoing method embodiments.

In another solution, the communication apparatus 1400 is configured to implement operations performed by the second ECS in the foregoing method embodiments.

For example, the processor 1410 is configured to implement a processing-related operation performed by the second ECS in the foregoing method embodiments, and the transceiver 1430 is configured to implement a transceiver-related operation performed by the second ECS in the foregoing method embodiments.

In another solution, the communication apparatus 1400 is configured to implement operations performed by the first EAS in the foregoing method embodiments.

For example, the processor 1410 is configured to implement a processing-related operation performed by the first EAS in the foregoing method embodiments, and the transceiver 1430 is configured to implement a transceiver-related operation performed by the first EAS in the foregoing method embodiments.

An embodiment of this application further provides a communication apparatus 1500. The communication apparatus 1500 may be a terminal device or may be a chip. The communication apparatus 1500 may be configured to perform operations performed by the terminal device in the foregoing method embodiments.

When the communication apparatus 1500 is the terminal device, FIG. 15 is a simplified schematic of a structure of a terminal device 1500. As shown in FIG. 15, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to receive data entered by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data and processes the data. For ease of description, FIG. 15 shows only one memory and one processor. In an actual terminal device product, there may be one or more processors and one or more memories. The memory may also be referred to as a storage medium, a storage device, or the like. The memory may be disposed independently of the processor, or may be integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 15, the terminal device includes a transceiver unit 1510 and a processing unit 1520. The transceiver unit 1510 may also be referred to as a transceiver, a transceiver machine, a transceiver apparatus, or the like. The processing unit 1520 may also be referred to as a processor, a processing board, a processing module, a processing apparatus, or the like.

Optionally, a device configured to implement a receiving function in the transceiver unit 1510 may be considered as a receiving unit, and a device configured to implement a sending function in the transceiver unit 1510 may be considered as a sending unit. In other words, the transceiver unit 1510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

For example, in an implementation, the processing unit 1520 is configured to perform a processing action on a terminal device side in FIG. 4, FIG. 5, FIG. 6, FIG. 7, FIG. 8, FIG. 9, FIG. 10, or FIG. 12. The transceiver unit 1510 is configured to perform a transceiver action on the terminal device side in FIG. 4, FIG. 5, FIG. 6, FIG. 7, FIG. 8, FIG. 9, FIG. 10, or FIG. 12.

It should be understood that FIG. 15 is merely an example instead of a limitation, and the foregoing terminal device including the transceiver unit and the processing unit may not depend on the structure shown in FIG. 15.

When the communication apparatus 1500 is the chip, the chip includes a transceiver unit and a processing unit. The transceiver unit may be an input/output circuit or a communication interface. The processing unit may be a processor, a microprocessor, or an integrated circuit that is integrated on the chip.

An embodiment of this application further provides a communication apparatus 1600. The communication apparatus 1600 may be a network device or may be a chip. The communication apparatus 1600 may be configured to perform operations performed by the network device in the foregoing method embodiments. The network device may include at least one of an EES, a first ECS, a second ECS, or a first EAS.

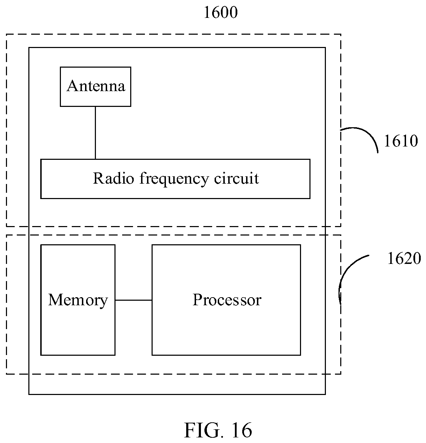

FIG. 16 is a simplified schematic of a structure of a network device 1600. The network device includes a part 1610 and a part 1620. The part 1610 is mainly used to receive and send a radio frequency signal and perform conversion between the radio frequency signal and a baseband signal. The part 1620 is mainly used to perform signal processing, control the network device, and the like. The part 1610 may be usually referred to as a transceiver unit, a transceiver machine, a transceiver circuit, a transceiver, or the like. The part 1620 is usually a control center of the network device, and may be usually referred to as a processing unit configured to control the network device to perform a processing operation on a network device side in the foregoing method embodiments.

The transceiver unit in the part 1610 may also be referred to as a transceiver machine, a transceiver, or the like. The transceiver unit includes an antenna and a radio frequency circuit. The radio frequency circuit is mainly configured to perform radio frequency processing. Optionally, a device configured to implement a receiving function in the part 1610 may be considered as a receiving unit, and a device configured to implement a sending function may be considered as a sending unit. In other words, the part 1610 includes the receiving unit and the sending unit. The receiving unit may also be referred to as a receiver machine, a receiver, a receiver circuit, or the like, and the sending unit may be referred to as a transmitter machine, a transmitter, a transmitter circuit, or the like.

The part 1620 may include one or more boards, and each board may include one or more processors and one or more memories. The processor is configured to read and execute a program in the memory to implement a baseband processing function and control a base station. If there are a plurality of boards, the boards may be interconnected to enhance a processing capability. In an optional implementation, alternatively, the plurality of boards may share one or more processors, the plurality of boards may share one or more memories, or the plurality of boards may share one or more processors at the same time.

For example, in an implementation, the processing unit 1520 is configured to perform a processing action on an EES side in FIG. 4, FIG. 11, or FIG. 12. The transceiver unit 1510 is configured to perform a transceiver action on the EES side in FIG. 4, FIG. 11, or FIG. 12.

For another example, in an implementation, the processing unit 1520 is configured to perform a processing action on a first ECS side in FIG. 5, FIG. 6, or FIG. 12. The transceiver unit 1510 is configured to perform a transceiver action on the first ECS side in FIG. 5, FIG. 6, or FIG. 12.

For another example, in an implementation, the processing unit 1520 is configured to perform a processing action on a second ECS side in FIG. 5, FIG. 7, FIG. 8, FIG. 9, FIG. 10, or FIG. 12. The transceiver unit 1510 is configured to perform a transceiver action on the second ECS side in FIG. 5, FIG. 7, FIG. 8, FIG. 9, FIG. 10, or FIG. 12.

For another example, in an implementation, the processing unit 1520 is configured to perform a processing action on a first EAS side in FIG. 11 or FIG. 12. The transceiver unit 1510 is configured to perform a transceiver action on the first EAS side in FIG. 11 or FIG. 12.

It should be understood that FIG. 16 is merely an example instead of a limitation, and the foregoing network device including the transceiver unit and the processing unit may not depend on the structure shown in FIG. 16.

When the communication apparatus 1600 is the chip, the chip includes a transceiver unit and a processing unit. The transceiver unit may be an input/output circuit or a communication interface. The processing unit is a processor, a microprocessor, or an integrated circuit that is integrated on the chip.

An embodiment of this application further provides a computer-readable storage medium. The computer-readable storage medium stores computer instructions used to implement the method performed by the terminal device, the method performed by the EES, the method performed by the first ECS, the method performed by the second ECS, or the method performed by the first EAS in the foregoing method embodiments.

For example, when the computer program is executed by a computer, the computer is enabled to implement the method performed by the terminal device, the method performed by the EES, the method performed by the first ECS, the method performed by the second ECS, or the method performed by the first EAS in the foregoing method embodiments.

An embodiment of this application further provides a computer program product including instructions. When the instructions are executed by a computer, the computer is enabled to implement the method performed by the terminal device, the method performed by the EES, the method performed by the first ECS, the method performed by the second ECS, or the method performed by the first EAS in the foregoing method embodiments.

An embodiment of this application further provides a device selection system. The device selection system includes one or more of the following execution bodies in the foregoing embodiments:
the foregoing EES, UE, first ECS, second ECS, or first EAS.

It may be clearly understood by a person skilled in the art that, for convenient and brief description, for explanations and beneficial effects of related content in any communication apparatus provided above, refer to corresponding method embodiments provided above. Details are not described herein again.

In embodiments of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (which is also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a terminal device, a network device, or a functional module that can invoke and execute a program and that is in the terminal device or the network device.

Aspects or features of this application may be implemented as a method, an apparatus, or a product that uses standard programming and/or engineering technologies. The term "product" used in this specification may cover a computer program that can be accessed from any computer-readable device, carrier, or medium.

The computer-readable storage medium may be any usable medium accessible by a computer, or a data storage device, for example, a server or a data center, integrating one or more usable media. The usable medium (or the computer-readable medium) may include, for example, but is not limited to: various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, a flash memory device (for example, an erasable programmable read-only memory (erasable programmable read-only memory, EPROM), a card, a stick, or a key drive), or a semiconductor medium (for example, a solid-state drive (solid-state drive, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable medium" may include but is not limited to: a radio channel and various other media that can store, include, and/or carry instructions and/or data.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should be further noted that the memory described in this specification is intended to include but not limited to these memories and any memory of another proper type.

In several embodiments provided in this application, it should be understood that the disclosed apparatuses and methods may be implemented in other manners. For example, the foregoing described apparatus embodiments are merely examples. For example, division into the foregoing units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The foregoing units described as separate parts may or may not be physically separate, and parts displayed as units may or may not be physical units, that is, may be located in one position, or may be distributed on a plurality of network units. Some or all of the units may be selected according to actual needs to implement the solutions provided in this application.

In addition, functional units in embodiments of this application may be integrated into one unit, each of the units may exist alone physically, or two or more units may be integrated into one unit.

All or some of the foregoing embodiments may be implemented by software, hardware, firmware, or any combination thereof.

When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application as defined by the appended claims.

## Claims

1. A device selection method, comprising:
receiving (S401), by an edge enabler server EES from a terminal device, information for requesting to determine a first edge application server EAS for the terminal device;
after the EES receives the information for requesting to determine the first edge application server EAS for the terminal device, determining (S402), by the EES, the first EAS based on at least one of a public land mobile network identity PLMN ID corresponding to the terminal device or an edge computing service provider identity ECSP ID corresponding to the terminal device, wherein the first EAS supports a service of the terminal device; and
sending (S403), by the EES, information about the first EAS to the terminal device;
wherein the information for requesting to determine the first EAS for the terminal device comprises the ECSP ID or the PLMN ID corresponding to the terminal device.

2. The method according to claim 1, wherein the determining, by the EES, the first EAS based on at least one of a PLMN ID corresponding to the terminal device or an ECSP ID corresponding to the terminal device comprises at least one of the following manners:
determining, by the EES, the first EAS based on a PLMN ID corresponding to an EAS registered with the EES and the PLMN ID corresponding to the terminal device; or
determining, by the EES, the first EAS based on an ECSP ID corresponding to an EAS registered with the EES and the ECSP ID corresponding to the terminal device, wherein
the first EAS is an EAS registered with the EES.

3. The method according to claim 1 or 2, wherein the method further comprises:
receiving, by the EES and from the first EAS, a PLMN ID corresponding to the first EAS or an ECSP ID corresponding to the first EAS.

4. The method according to claim 3, wherein the PLMN ID corresponding to the first EAS or the ECSP ID corresponding to the first EAS is carried in an EAS profile of an EAS registration request.

5. The method according to any one of claims 1 to 4, wherein the information for requesting to determine the first edge application server EAS for the terminal device is carried in an EAS discovery request, an EAS discovery subscription request, an EAS discovery subscription update request, or a service discovery request.

6. The method according to claim 1, wherein the method further comprises:
sending, by the terminal device to the EES, the information for requesting to determine the first EAS for the terminal device; and
receiving, by the terminal device, the information about the first EAS from the terminal device.

7. The method according to claim 6, wherein the determining, by the EES, the first EAS based on at least one of a PLMN ID corresponding to the terminal device or an ECSP ID corresponding to the terminal device comprises at least one of the following manners:
determining, by the EES, the first EAS based on a PLMN ID corresponding to an EAS registered with the EES and the PLMN ID corresponding to the terminal device; or
determining, by the EES, the first EAS based on an ECSP ID corresponding to an EAS registered with the EES and the ECSP ID corresponding to the terminal device, wherein the first EAS is an EAS registered with the EES.

8. The method according to claim 7, wherein the method further comprises:
sending, by the first EAS, a PLMN ID corresponding to the first EAS or an ECSP ID corresponding to the first EAS to the EES.

9. The method according to claim 8, wherein the PLMN ID corresponding to the first EAS or the ECSP ID corresponding to the first EAS is carried in an EAS profile of an EAS registration request.

10. A communication apparatus, in particular an edge enabler server EES, configured to perform the method according to any one of claims 1 to 5.

11. A computer-readable storage medium, wherein the computer-readable storage medium stores a computer program, and when the computer program is run on a computer, the computer is enabled to perform the method according to any one of claims 1 to 5.

12. A computer program product, wherein the computer program product comprises instructions used to perform the method according to any one of claims 1 to 5.

13. A system, comprising:
the communication apparatus according to claim 10, and
further comprising at least one of:
a first edge application server configured to send a PLMN ID corresponding to the first EAS or a ECSP ID corresponding to the first EAS to the EES, and
a terminal device configured to send information for requesting to determine the first EAS for the terminal device to the EES and receive information about the first EAS, wherein the information for requesting to determine the first EAS for the terminal device comprises the ECSP ID or the PLMN ID corresponding to the terminal device.

## Patentansprüche

1. Vorrichtungsauswahlverfahren, umfassend:
Empfangen (S401), durch einen Edge-Enabler-Server, EES, von einer Endgerätevorrichtung, von Informationen zum Anfordern zum Bestimmen eines ersten Edge-Anwendungsservers, EAS, für die Endgerätevorrichtung;
nachdem der EES die Informationen zum Anfordern zum Bestimmen des ersten Edge-Anwendungsservers, EAS, für die Endgerätevorrichtung empfangen hat, Bestimmen (S402), durch den EES, des ersten EAS basierend auf mindestens einer von einer Kennung des öffentlichen Mobilfunknetzes, PLMN-ID, die der Endgerätevorrichtung entspricht, oder einer Kennung des Edge-Computing-Dienstanbieters, ECSP-ID, die der Endgerätevorrichtung entspricht, wobei der erste EAS einen Dienst der Endgerätevorrichtung unterstützt; und
Senden (S403), durch den EES, von Informationen über den ersten EAS an die Endgerätevorrichtung;
wobei die Informationen zum Anfordern zum Bestimmen des ersten EAS für die Endgerätevorrichtung die ECSP-ID oder die PLMN-ID, die der Endgerätevorrichtung entspricht, umfassen.

2. Verfahren nach Anspruch 1, wobei das Bestimmen, durch den EES, des ersten EAS basierend auf mindestens einer von einer PLMN-ID, die der Endgerätevorrichtung entspricht, oder einer ECSP-ID, die der Endgerätevorrichtung entspricht, mindestens eine der folgenden Vorgehensweisen umfasst:
Bestimmen, durch den EES, des ersten EAS basierend auf einer PLMN-ID, die einem bei dem EES registrierten EAS entspricht, und der PLMN-ID, die der Endgerätevorrichtung entspricht; oder
Bestimmen, durch den EES, des ersten EAS basierend auf einer ECSP-ID, die einem bei dem EES registrierten EAS entspricht, und der ECSP-ID, die der Endgerätevorrichtung entspricht, wobei der erste EAS ein bei dem EES registrierter EAS ist.

3. Verfahren nach Anspruch 1 oder 2, wobei das Verfahren ferner Folgendes umfasst:
Empfangen, durch den EES und von dem ersten EAS, einer PLMN-ID, die dem ersten EAS entspricht, oder einer ECSP-ID, die dem ersten EAS entspricht.

4. Verfahren nach Anspruch 3, wobei die PLMN-ID, die dem ersten EAS entspricht, oder die ECSP-ID, die dem ersten EAS entspricht, in einem EAS-Profil einer EAS-Registrierungsanforderung enthalten ist.

5. Verfahren nach einem der Ansprüche 1 bis 4, wobei die Informationen zum Anfordern zum Bestimmen des ersten Edge-Anwendungsservers, EAS, für die Endgerätevorrichtung in einer EAS-Ermittlungsanforderung, einer EAS-Ermittlungsabonnementanforderung, einer EAS-Ermittlungsabonnementaktualisierungsanforderung oder einer Dienstermittlungsanforderung enthalten sind.

6. Verfahren nach Anspruch 1, wobei das Verfahren ferner Folgendes umfasst:
Senden, durch die Endgerätevorrichtung an den EES, der Informationen zum Anfordern zum Bestimmen des ersten EAS für die Endgerätevorrichtung; und
Empfangen, durch die Endgerätevorrichtung, der Informationen über den ersten EAS von der Endgerätevorrichtung.

7. Verfahren nach Anspruch 6, wobei das Bestimmen, durch den EES, des ersten EAS basierend auf mindestens einer von einer PLMN-ID, die der Endgerätevorrichtung entspricht, oder einer ECSP-ID, die der Endgerätevorrichtung entspricht, mindestens eine der folgenden Vorgehensweisen umfasst:
Bestimmen, durch den EES, des ersten EAS basierend auf einer PLMN-ID, die einem bei dem EES registrierten EAS entspricht, und der PLMN-ID, die der Endgerätevorrichtung entspricht; oder
Bestimmen, durch den EES, des ersten EAS basierend auf einer ECSP-ID, die einem bei dem EES registrierten EAS entspricht, und der ECSP-ID, die der Endgerätevorrichtung entspricht, wobei der erste EAS ein bei dem EES registrierter EAS ist.

8. Verfahren nach Anspruch 7, wobei das Verfahren ferner Folgendes umfasst:
Senden, durch den ersten EAS, einer PLMN-ID, die dem ersten EAS entspricht, oder einer ECSP-ID, die dem ersten EAS entspricht, an den EES.

9. Verfahren nach Anspruch 8, wobei die PLMN-ID, die dem ersten EAS entspricht, oder die ECSP-ID, die dem ersten EAS entspricht, in einem EAS-Profil einer EAS-Registrierungsanforderung enthalten ist.

10. Kommunikationseinrichtung, insbesondere ein Edge-Enabler-Server, EES, der dazu konfiguriert ist, das Verfahren nach einem der Ansprüche 1 bis 5 durchzuführen.

11. Computerlesbares Speichermedium, wobei das computerlesbare Speichermedium ein Computerprogramm speichert und, wenn das Computerprogramm auf einem Computer läuft, der Computer in die Lage versetzt wird, das Verfahren nach einem der Ansprüche 1 bis 5 durchzuführen.

12. Computerprogrammprodukt, wobei das Computerprogrammprodukt Anweisungen umfasst, die dazu verwendet werden, das Verfahren nach einem der Ansprüche 1 bis 5 durchzuführen.

13. System, umfassend:
Kommunikationseinrichtung nach Anspruch 10 und
ferner umfassend mindestens eines von Folgenden:
ein erster Edge-Anwendungsserver, der dazu konfiguriert ist, eine PLMN-ID, die dem ersten EAS entspricht, oder eine ECSP-ID, die dem ersten EAS entspricht, an den EES zu senden, und
eine Endgerätevorrichtung, die dazu konfiguriert ist, Informationen zum Anfordern zum Bestimmen des ersten EAS für die Endgerätevorrichtung an den EES zu senden und Informationen über den ersten EAS zu empfangen, wobei die Informationen zum Anfordern zum Bestimmen des ersten EAS für die Endgerätevorrichtung die ECSP-ID oder die PLMN-ID, die der Endgerätevorrichtung entspricht, umfassen.

## Revendications

1. Procédé de sélection de dispositif, comprenant :
la réception (S401), par un serveur d'activation périphérique, EES, provenant d'un dispositif terminal, d'informations de demande de détermination d'un premier serveur d'application périphérique, EAS, pour le dispositif terminal ;
après que l'EES reçoit les informations de demande de détermination du premier serveur d'application périphérique, EAS, pour le dispositif terminal, la détermination (S402), par l'EES, du premier EAS sur la base d'au moins l'une d'une identité de réseau mobile terrestre public, ID PLMN, correspondant au dispositif terminal ou d'une identité de fournisseur de services de calcul périphérique, ID ECSP, correspondant au dispositif terminal, dans lequel le premier EAS prend en charge un service du dispositif terminal ; et
l'envoi (S403), par l'EES, d'informations sur le premier EAS au dispositif terminal ;
dans lequel les informations de demande de détermination du premier EAS pour le dispositif terminal comprennent l'ID ECSP ou l'ID PLMN correspondant au dispositif terminal.

2. Procédé selon la revendication 1, dans lequel la détermination, par l'EES, du premier EAS sur la base au moins d'un ID PLMN correspondant au dispositif terminal ou d'un ID ECSP correspondant au dispositif terminal comprend au moins l'une des manières suivantes :
la détermination, par l'EES, du premier EAS sur la base d'un ID PLMN correspondant à un EAS enregistré auprès de l'EES et de l'ID PLMN correspondant au dispositif terminal ; ou
la détermination, par l'EES, du premier EAS sur la base d'un ID ECSP correspondant à un EAS enregistré auprès de l'EES et de l'ID ECSP correspondant au dispositif terminal, dans lequel
le premier EAS est un EAS enregistré auprès de l'EES.

3. Procédé selon la revendication 1 ou 2, dans lequel le procédé comprend en outre :
la réception, par l'EES et en provenance du premier EAS, d'un ID PLMN correspondant au premier EAS ou d'un ID ECSP correspondant au premier EAS.

4. Procédé selon la revendication 3, dans lequel l'ID PLMN correspondant au premier EAS ou l'ID ECSP correspondant au premier EAS est transporté dans un profil EAS d'une requête d'enregistrement EAS.

5. Procédé selon l'une quelconque des revendications 1 à 4, dans lequel les informations de demande de détermination du premier serveur d'application périphérique, EAS, pour le dispositif terminal sont transportées dans une requête de découverte EAS, une requête d'abonnement à la découverte EAS, une requête de mise à jour d'abonnement à la découverte EAS, ou une requête de découverte de service.

6. Procédé selon la revendication 1, dans lequel le procédé comprend en outre :
l'envoi, par le dispositif terminal à l'EES, des informations de demande de détermination du premier EAS pour le dispositif terminal ; et
la réception, par le dispositif terminal, des informations sur le premier EAS provenant du dispositif terminal.

7. Procédé selon la revendication 6, dans lequel la détermination, par l'EES, du premier EAS sur la base au moins d'un ID PLMN correspondant au dispositif terminal ou d'un ID ECSP correspondant au dispositif terminal comprend au moins l'une des manières suivantes :
la détermination, par l'EES, du premier EAS sur la base d'un ID PLMN correspondant à un EAS enregistré auprès de l'EES et de l'ID PLMN correspondant au dispositif terminal ; ou
la détermination, par l'EES, du premier EAS sur la base d'un ID ECSP correspondant à un EAS enregistré auprès de l'EES et de l'ID ECSP correspondant au dispositif terminal, dans lequel le premier EAS est un EAS enregistré auprès de l'EES.

8. Procédé selon la revendication 7, dans lequel le procédé comprend en outre :
l'envoi, par le premier EAS, d'un ID PLMN correspondant au premier EAS ou d'un ID ECSP correspondant au premier EAS à l'EES.

9. Procédé selon la revendication 8, dans lequel l'ID PLMN correspondant au premier EAS ou l'ID ECSP correspondant au premier EAS est transporté dans un profil EAS d'une requête d'enregistrement EAS.

10. Appareil de communication, en particulier un serveur d'activation périphérique, EES, configuré pour réaliser le procédé selon l'une quelconque des revendications 1 à 5.

11. Support de stockage lisible par ordinateur, dans lequel le support de stockage lisible par ordinateur stocke un programme informatique, et lorsque le programme informatique fonctionne sur un ordinateur, l'ordinateur est activé pour réaliser le procédé selon l'une quelconque des revendications 1 à 5.

12. Produit de programme informatique, dans lequel le produit de programme informatique comprend des instructions utilisées pour réaliser le procédé selon l'une quelconque des revendications 1 à 5.

13. Système comprenant :
l'appareil de communication selon la revendication 10, et
comprenant en outre au moins l'un des éléments suivants :
un premier serveur d'application périphérique configuré pour envoyer un ID PLMN correspondant au premier EAS ou un ID ECSP correspondant au premier EAS à l'EES, et
un dispositif terminal configuré pour envoyer des informations de demande de détermination du premier EAS pour le dispositif terminal à l'EES et recevoir des informations sur le premier EAS, dans lequel les informations de demande de détermination du premier EAS pour le dispositif terminal comprennent l'ID ECSP ou l'ID PLMN correspondant au dispositif terminal.
